# FASCICULE DE BREVET EUROPEEN

(11) **EP 3 814 814 B1**
(45) Date de publication et mention de la délivrance du brevet: **30.03.2022**
(21) Numéro de dépôt: 19733029.3
(22) Date de dépôt: 25.06.2019
(51) Int. Cl.: G02B 5/28, G01J 3/26, G02B 26/00

(54) **FILTRE SPECTRAL COMPRENANT AU MOINS DEUX STRUCTURES DE FABRY-PEROT COUPLEES**
SPEKTRALFILTER MIT MINDESTENS ZWEI GEKOPPELTEN FABRY-PEROT-STRUKTUREN
SPECTRAL FILTER COMPRISING AT LEAST TWO COUPLED FABRY-PEROT STRUCTURES

(30) Priorité: 28.06.2018 FR 1855831
(43) Date de publication de la demande: 05.05.2021
(73) Titulaire: Office National d'Etudes et de Recherches Aérospatiales, 91120 Palaiseau (FR)
(72) Inventeur: FIX, Baptiste, 75019 PARIS (FR); JAECK, Julien, 91440 BURES-SUR-YVETTE (FR); BOUCHON, Patrick, 91370 VERRIERES LE BUISSON (FR); HAIDAR, Riad, 75012 PARIS (FR)
(74) Mandataire: Plasseraud IP
(86) Numéro de dépôt international: PCT/EP2019/066833
(87) Numéro de publication internationale: WO 2020/002330

(56) Documents cités:
- M. MAKHSIYAN ET AL.: "Plasmonic nano-antennas for spectral emissivity engineering", PROC. OF SPIE, vol. 9502, 95020H, 5 mai 2015 (2015-05-05) , pages 95020H-1-95020H-6, XP060053082, DOI: 10.1063/1.4866342 cité dans la demande
- SEIFOURI MAHMOOD ET AL: "Symmetric metal nanogratings and horned shape extended pads to enhance light transmission of plasmonic metal-semiconductor-metal photodetector", OPTICAL AND QUANTUM ELECTRONICS, vol. 49, no. 4, 10 mars 2017 (2017-03-10), pages 1-13, XP036222969, CHAPMAN AND HALL, LONDON, GB ISSN: 0306-8919, DOI: 10.1007/S11082-017-0983-X [extrait le 2017-03-10]
- BAPTISTE FIX ET AL: "High-quality-factor double Fabry-Perot plasmonic nanoresonator", OPTICS LETTERS, vol. 42, no. 24, 15 décembre 2017 (2017-12-15), pages 5062-5065, XP055584841, US ISSN: 0146-9592, DOI: 10.1364/OL.42.005062

## Description

La présente invention concerne un filtre spectral qui comprend au moins deux structures de Fabry-Pérot couplées.

Les structures de Fabry-Pérot sont très connues et très utilisées pour de nombreuses applications, notamment des applications de filtrage optique. Chaque structure de Fabry-Pérot comporte deux portions de surfaces réfléchissantes qui sont situées en vis-à-vis et parallèles, et dont l'une au moins est partiellement transmissive. La structure présente alors une résonance lorsqu'elle reçoit un rayonnement électromagnétique incident dont la longueur d'onde est variable. Cette résonance apparaît lorsque qu'une onde stationnaire qui est entretenue par le rayonnement incident à l'intérieur de la structure de Fabry-Pérot, entre ses deux portions de surfaces réfléchissantes, présente une amplitude maximale.

Dans des structures de Fabry-Pérot d'un premier type connu, les deux portions de surfaces réfléchissantes sont chacune une portion d'interface entre un métal et un matériau diélectrique. Elles sont parallèles et disposées en vis-à-vis sur deux côtés opposés du matériau diélectrique, et l'une est suffisamment fine pour être partiellement transmissive. L'onde stationnaire qui génère le comportement à résonance est constituée par des composantes d'onde qui se propagent perpendiculairement aux portions de surfaces métalliques. La présente invention ne concerne pas des structures de Fabry-Pérot de ce premier type.

Dans des structures de Fabry-Pérot d'un autre type, aussi connu, chacune des deux portions de surfaces réfléchissantes n'est pas constituée par une interface entre deux matériaux qui sont différents. Une telle structure de Fabry-Pérot de cet autre type peut être constituée encore par deux interfaces chacune entre un métal et un matériau diélectrique, qui sont parallèles et disposées en vis-à-vis sur deux côtés opposés du matériau diélectrique. Dans ce cas, l'indice de réfraction qui est effectif pour le matériau diélectrique est n_{eff} donné par n_{eff}² = ε_{d}·(1+2·δ/h-ε_{d}/εₘ), où ε_{d} et εₘ sont les permittivités diélectriques respectives du matériau diélectrique et du métal, le métal étant supposé le même pour les deux interfaces, δ est l'épaisseur de peau de ce métal et h est l'épaisseur du matériau diélectrique entre les deux interfaces. Les valeurs d'indice de réfraction effectif qui sont ainsi obtenues peuvent être très élevées à cause de plasmons qui apparaissent dans le métal. L'indice de réfraction qui est ainsi effectif à l'intérieur du matériau diélectrique présente donc des discontinuités aux extrémités des interfaces métal-diélectrique, passant de la valeur n_{eff} entre les deux interfaces à la valeur ε_{d}^{1/2} au-delà des extrémités des interfaces. Les deux discontinuités d'indice de réfraction qui sont ainsi créées dans le matériau diélectrique déterminent deux portions de surfaces qui sont partiellement réfléchissantes, bien que ce ne soient pas des interfaces réelles entre matériaux différents. Ces deux portions de surfaces partiellement réfléchissantes permettent alors de contenir une onde stationnaire dans le matériau diélectrique, entre les deux interfaces métal-diélectrique, l'onde stationnaire se propageant alors parallèlement à ces interfaces métal-diélectrique. Cette onde stationnaire peut produire un comportement à résonance, qui est susceptible d'être utilisé pour diverses applications, y compris des applications de filtrage spectral. L'article de M. Makhsiyan et al. qui est intitulé «Plasmonic nano-antennas for spectral emissivity engineering», Proc. of SPIE, Vol. 9502, pp. 95020H-1 à 95020H-6, 2015, montre de telles structures de Fabry-Pérot qui sont voisines sur un subtrat commun, mais qui présentent des résonances indépendantes, bien que proches spectralement.

Selon encore un autre type connu de structures de Fabry-Pérot, chaque structure est constituée par une tranchée qui est formée à partir d'une face plane d'un support métallique, par exemple en or. La direction de profondeur de la tranchée est perpendiculaire à la face du support, et la tranchée possède un profil de section rectangulaire, dans un plan perpendiculaire à la face du support, avec un fond de tranchée qui est plan et parallèle à la face du support. Alors le prolongement de la face du support à travers l'ouverture de la tranchée, et le fond de la tranchée, constituent les deux portions de surfaces réfléchissantes d'une telle structure de Fabry-Pérot. L'onde stationnaire qui est entretenue par le rayonnement incident à l'intérieur de la structure de Fabry-Pérot est constituée de composantes d'onde qui se propagent dans la tranchée perpendiculairement à la face du support, à partir du niveau de la face du support en direction du fond de la tranchée et dans le sens inverse. La longueur d'onde de résonance est déterminée par la profondeur de la tranchée, et le facteur de qualité de cette résonance dépend notamment de la largeur de la tranchée. En fait, ce troisième type de structures de Fabry-Pérot est mixte entre les deux qui ont été présentés précédemment, puisque le fond de la tranchée est une interface métal-gaz qui constitue l'une des portions de surfaces réfléchissantes effectives pour l'onde stationnaire, et que l'autre portion de surface réfléchissante qui est effective simultanément pour cette même onde stationnaire relie les extrémités des parois opposées de la tranchée au niveau de la face plane du support métallique. Cette dernière portion de surface réfléchissante n'est donc pas constituée par une interface entre deux matériaux qui sont différents.

L'article intitulé «High-quality-factor double Fabry-Perot plasmonic nanoresonator», de B. Fix et al., Optics Letters, Vol. 42, No. 24, pp. 5062-5065, et publié le 15 décembre 2017, décrit de disposer deux structures de Fabry-Pérot en forme de tranchées respectives à proximité l'une de l'autre dans la face d'un support commun. Il divulgue qu'une nouvelle résonance apparaît, qui peut être appelée résonance de couplage, et qui est distincte des résonances individuelles de chacune des deux structures de Fabry-Pérot. Notamment, la longueur d'onde de résonance de la résonance de couplage, appelée longueur d'onde de résonance de couplage dans la suite, est différente des longueurs d'onde de résonance des résonances individuelles, appelées longueurs d'onde de résonances individuelles. Pour cela, les deux structures de Fabry-Pérot doivent être différentes, de sorte que leurs longueurs d'onde de résonances individuelles soient différentes. Alors, le facteur de qualité qui est associé à la résonance de couplage peut être supérieur, voire très supérieur, aux facteurs de qualité des résonances individuelles des structures de Fabry-Pérot. Ce gain en termes de facteur de qualité peut être avantageux pour de nombreuses applications, notamment des applications de filtrage optique.

Autrement dit, plusieurs structures de Fabry-Pérot appartenant à un même groupe sont portées conjointement par la face du support. Chaque structure de Fabry-Pérot comprend deux portions de surfaces réfléchissantes qui sont disposées en vis-à-vis, parallèles l'une à l'autre, et séparées l'une de l'autre à l'intérieur de cette structure par un milieu diélectrique. Chacune des structures de Fabry-Pérot du groupe est dimensionnée de sorte qu'une composante d'onde de rayonnement électromagnétique puisse se propager entre les deux portions de surfaces réfléchissantes de cette structure, de l'une à l'autre, et de sorte qu'une onde stationnaire résulte des réflexions multiples de la composante d'onde qui se produisent en alternance au niveau des deux portions de surfaces réfléchissantes. Une résonance individuelle de chaque structure de Fabry-Pérot correspond alors à un maximum d'amplitude de l'onde stationnaire à l'intérieur de cette structure lorsque varie une longueur d'onde d'un rayonnement électromagnétique qui est incident sur le support.

En outre, l'une au moins des portions de surfaces réfléchissantes de chaque structure de Fabry-Pérot du groupe est séparée d'au moins une des portions de surfaces réfléchissantes de chaque autre structure du même groupe par un espace intermédiaire, parallèlement à la face du support.

En outre encore, au moins un paramètre qui détermine la résonance individuelle de chaque structure de Fabry-Pérot du groupe, séparément de chaque autre structure de Fabry-Pérot, possède des valeurs qui sont différentes entre au moins deux des structures du même groupe. Ainsi, ces au moins deux structures ont des valeurs respectives de longueur d'onde de résonance individuelle, effectives pour le rayonnement électromagnétique incident sur le support, qui sont différentes. Simultanément, ces au moins deux structures de Fabry-Pérot possèdent des valeurs respectives d'un facteur de qualité de résonance individuelle telles que, sur un axe de longueur d'onde du rayonnement incident, les intervalles suivants de résonances individuelles :
[λᵣᵢ·(1-3/Qᵢ); λᵣᵢ·(1+3/Qᵢ)], aient un recouvrement deux-à-deux, où i est un nombre entier qui identifie chaque structure de Fabry-Pérot à l'intérieur du groupe, et λᵣᵢ et Qᵢ sont respectivement les valeurs de longueur d'onde de résonance et de facteur de qualité de la résonance individuelle de la structure de Fabry-Pérot i.

Et en outre encore, une épaisseur hᵢ du milieu diélectrique, qui est relative à la structure de Fabry-Pérot i en étant mesurée perpendiculairement à la direction de propagation des composantes d'onde qui constituent l'onde stationnaire à l'intérieur de cette structure de Fabry-Pérot i, est supérieure ou égale à 0,125·λᵣᵢ/ n_{eff_i}, n_{eff_i} étant l'indice de réfraction qui est effectif pour le milieu diélectrique de la structure de Fabry-Pérot i. Autrement dit : hᵢ ≥ 0,125·λᵣᵢ/n_{eff_i}. Cette condition signifie que chaque structure de Fabry-Pérot i est sous-couplée au milieu de propagation qui est externe au filtre spectral, de sorte qu'elle présente une valeur de réflectivité ou de transmissivité énergétique, selon que le filtre spectral est destiné à être utilisé en réflexion ou en transmission, qui est significativement différente de zéro. Par exemple, la limite VLᵢ = 0,125·λᵣᵢ/n_{eff_i} peut correspondre à une valeur de réflectivité ou de transmissivité énergétique, selon que le filtre spectral est destiné à être utilisé en réflexion ou en transmission, d'environ 0,39 pour la structure de Fabry-Pérot i à la longueur d'onde de résonance individuelle λᵣᵢ de cette structure.

Lorsque ces conditions sont satisfaites, un couplage entre deux des structures de Fabry-Pérot du même groupe, dont les valeurs de longueur d'onde de résonance individuelle sont différentes, est produit par l'espace intermédiaire qui existe entre ces deux structures. Possiblement, un matériau qui est présent dans cet espace intermédiaire peut aussi contribuer au couplage. Une condition supplémentaire pour que le couplage soit efficace, est qu'une distance de séparation entre les deux structures de Fabry-Pérot ainsi couplées, qui est déterminée par leur espace intermédiaire parallèlement à la face du support, soit inférieure à une valeur de longueur d'onde de résonance relative au couplage, dite longueur d'onde de résonance de couplage, et effective pour le rayonnement électromagnétique qui est incident sur le filtre. Cette résonance de couplage résulte d'une interférence entre au moins trois ondes parmi lesquelles :
- une première onde qui provient d'une réflexion du rayonnement incident sur la face du support, ou d'une transmission du rayonnement incident à travers le support ;
- une deuxième onde qui émerge d'une première des structures de Fabry-Pérot du groupe, et qui résulte d'une superposition de plusieurs composantes d'onde parmi lesquelles au moins une a effectué au moins un aller-retour à l'intérieur d'une seconde des structures de Fabry-Pérot du même groupe, couplée avec la première structure ; et
- une troisième onde qui émerge de la seconde des structures de Fabry-Pérot du groupe, et qui résulte d'une autre superposition de plusieurs autres composantes d'onde parmi lesquelles au moins une a effectué au moins un aller-retour à l'intérieur de la première des structures de Fabry-Pérot du groupe.

Le support qui est ainsi muni de structures de Fabry-Pérot, dont certaines sont couplées entre elles de la façon qui vient d'être décrite, possède un spectre de réflexion qui présente un minimum. Ce minimum peut être étroit, si bien que le support peut constituer un filtre spectral dont la sélectivité est améliorée par rapport aux résonances individuelles respectives des structures de Fabry-Pérot. Cette amélioration de la sélectivité du filtrage résulte du couplage qui existe entre certaines des structures de Fabry-Pérot.

La condition hᵢ ≥ 0,125·λᵣᵢ/ n_{eff_i} pour i égal à 1 et 2, introduite plus haut, assure que les deuxième et troisième ondes qui participent à l'interférence à au moins trois ondes, ont des amplitudes respectives qui sont suffisantes pour que la résonance de couplage existe.

Dans le cas de l'article de B. Fix et al. cité plus haut, le groupe contient deux structures de Fabry-Pérot couplées, chacune de la forme d'une tranchée, et le paramètre qui détermine la longueur d'onde de résonance individuelle de chaque structure de Fabry-Pérot, séparément l'autre structure de Fabry-Pérot, est la profondeur de tranchée. La valeur de la longueur d'onde de résonance de couplage est aussi déterminée par les profondeurs des tranchées, mais en plus par la distance de séparation qui existe entre ces tranchées. Or il est particulièrement difficile de maîtriser suffisamment la réalisation de telles tranchées qui sont proches l'une de l'autre, pour obtenir une valeur précise qui est désirée pour la longueur d'onde de résonance de couplage. En outre, les cloisons entre tranchées voisines peuvent devenir fragiles lorsque les tranchées sont très proches. Le filtre qui est alors obtenu peut être particulièrement sensible à des rayures accidentelles.

A partir de cette situation, un but de la présente invention consiste à fournir un nouveau filtre qui comprend au moins un groupe de structures de Fabry-Pérot dont certaines sont couplées, et qui puisse être fabriqué simplement et à bas coût.

Un but additionnel peut être qu'un tel filtre présente une résistance supérieure, notamment contre des rayures.

Pour atteindre l'un au moins de ces buts ou d'autres, un premier aspect de l'invention propose un filtre à plusieurs structures de Fabry-Pérot couplées tel que décrit ci-dessus, mais dans lequel chaque structure de Fabry-Pérot comprend deux portions de surfaces métalliques qui sont parallèles à la face du support. Chaque structure de Fabry-Pérot comprend en outre un volume interne qui est limité entre ces deux portions de surfaces métalliques perpendiculairement à la face du support, et limité parallèlement à la face du support entre des bords opposés de l'une au moins des deux portions de surfaces métalliques de la structure. Ces deux bords opposés déterminent les positions des portions de surfaces réfléchissantes de la structure de Fabry-Pérot, de sorte que les composantes d'onde qui contribuent à la résonance de couplage se propagent parallèlement à la face du support à l'intérieur de chacune des structures de Fabry-Pérot couplées.

Un filtre conforme à l'invention peut donc être dépourvu de tranchées qui s'étendent en profondeur dans le support du filtre, si bien que sa fabrication ne nécessite pas de graver profondément ce support. En particulier, un filtre qui est conforme à l'invention peut être fabriqué en ne mettant en oeuvre que des étapes de dépôt de matériaux, possiblement à travers des masques appropriés, et éventuellement des étapes de gravure des matériaux qui ont été déposés. Ce filtre peut ainsi avoir un prix de revient qui est réduit, par rapport à un filtre tel que connu de l'art antérieur à base de structures de Fabry-Pérot en forme de tranchées.

En particulier, un filtre qui est conforme à l'invention ne présente pas de cloisons de séparation entre des tranchées voisines, si bien qu'il possède une résistance supérieure contre des rayures involontaires.

Dans divers modes de réalisation de l'invention, le paramètre qui détermine la résonance individuelle de chaque structure de Fabry-Pérot du groupe, séparément de chaque autre structure de Fabry-Pérot de ce groupe, et qui possède des valeurs qui sont différentes entre deux des structures du groupe qui sont couplées l'une avec l'autre, peut être l'un des suivants :
- une largeur du volume interne de chaque structure, mesurée parallèlement à la face du support entre les portions de surfaces réfléchissantes de cette structure,
- un indice de réfraction du milieu diélectrique dans le volume interne de chaque structure,
- un taux de remplissage et/ou une composition du milieu diélectrique dans le volume interne de chaque structure,
- un coefficient d'absorption du rayonnement électromagnétique par chaque structure,
- ou une combinaison de plusieurs des paramètres précédents.

De tels modes de différenciation entre les structures de Fabry-Pérot qui sont couplées peuvent être mis en œuvre facilement, sans augmenter significativement la complexité de fabrication ni le prix de revient du filtre.

Au sein du filtre, le groupe de structures de Fabry-Pérot peut ne comprendre que deux structures de Fabry-Pérot qui sont couplées l'une avec l'autre. Alternativement, il peut comprendre trois structures de Fabry-Pérot qui sont couplées entre elles par paires, produisant ainsi deux ou trois résonances de couplage, notamment selon leurs valeurs respectives de longueur d'onde de résonance individuelle. De façon générale, le groupe peut comprendre un nombre quelconque de structures de Fabry-Pérot, supérieur ou égal à deux structures, produisant autant de résonances de couplage qu'il existe de paires différentes de structures de Fabry-Pérot qui sont couplées l'une avec l'autre à l'intérieur du groupe.

Avantageusement, chaque structure de Fabry-Pérot du groupe, notamment une épaisseur du volume interne entre les deux portions de surfaces métalliques de cette structure, mesurée perpendiculairement à la face du support, peut être conçue pour que la valeur du facteur de qualité de résonance individuelle de cette structure soit inférieure à 20. Simultanément, le groupe de structures de Fabry-Pérot, notamment l'espace intermédiaire entre deux des structures de ce groupe qui sont couplées, peut être conçu pour qu'un facteur de qualité qui est associé à la résonance de couplage soit supérieur à 20, préférablement supérieur à 70, voire supérieur à 150. De cette façon, le filtre peut avoir une sélectivité élevée, ou très élevée, produite par l'une au moins des résonances de couplage.

Dans des modes de réalisation avantageux, notamment des modes de réalisation qui sont faciles à mettre en œuvre, le milieu diélectrique dans le volume interne de chaque structure de Fabry-Pérot peut être constitué par une portion respective d'une couche à faces parallèles et épaisseur uniforme, cette couche étant identique pour toutes les structures du groupe et constituée d'un matériau diélectrique solide.

Possiblement, un motif qui comprend les structures de Fabry-Pérot du groupe, telles que séparées par chaque espace intermédiaire entre deux de ces structures à l'intérieur du groupe, peut être répété de multiples fois sur la face du support.

Alors, pour des réalisations de l'invention à motif unidimensionnel, l'une au moins des portions de surfaces métalliques de chacune des structures de Fabry-Pérot peut être une face d'un ruban métallique respectif. Dans ce cas, le motif qui comprend les structures de Fabry-Pérot du groupe peut être répété de multiples fois, de préférence périodiquement, selon une direction de répétition qui est parallèle à la face du support, sous forme de rubans métalliques séparés et parallèles.

Alternativement, pour des réalisations de l'invention à motif bidimensionnel, l'une au moins des portions de surfaces métalliques de chaque structure de Fabry-Pérot peut posséder une forme carrée, rectangulaire, circulaire, elliptique, en croix ou en équerre, parallèlement à la face du support. Dans un tel autre cas, le motif qui comprend le groupe des structures de Fabry-Pérot peut être répété de multiples fois selon deux directions de répétition qui sont distinctes et parallèles à la face du support, de préférence périodiquement, et de préférence les deux directions de répétition étant perpendiculaires entre elles. Possiblement pour de telles réalisations de l'invention à motif bidimensionnel, le motif peut comprendre quatre structures de Fabry-Pérot qui sont disposées en matrice 2 × 2 selon les deux directions de répétition, formant ainsi six paires de structures de Fabry-Pérot. Chaque paire est associée à un espace intermédiaire entre deux des structures du motif autre que l'espace intermédiaire de chaque autre paire de structures dans le motif, et certains au moins des espaces intermédiaires produisent un couplage entre les structures de la paire correspondante.

De façon générale, un filtre spectral qui est conforme à l'invention peut être adapté pour être utilisé en réflexion. Dans ce cas, les première, deuxième et troisième ondes sont produites par le filtre d'un côté du support par lequel le rayonnement incident arrive sur le filtre. Alternativement, d'autres filtres spectraux conformes à l'invention peuvent être adaptés pour être utilisés en transmission.

Le perfectionnement qui est proposé maintenant peut être adapté pour obtenir un filtre à coupure raide et/ou à fenêtre de sélection spectrale qui est élargie. Pour cela, le filtre peut comprendre en outre au moins un résonateur de Fabry-Pérot qui présente une résonance individuelle supplémentaire, effective pour le rayonnement incident en plus de chaque résonance de couplage. Le résonateur de Fabry-Pérot ainsi ajouté peut être conçu pour que sa valeur de longueur d'onde de résonance individuelle soit décalée par rapport à au moins une valeur de longueur d'onde de résonance de couplage du groupe des structures de Fabry-Pérot, et que cette valeur de longueur d'onde de résonance de couplage soit à l'intérieur de l'intervalle suivant de résonance individuelle du résonateur de Fabry-Pérot: [λᵣ₀·(1-10/Q₀); λᵣ₀·(1+10/Q₀)], où λᵣ₀ et Q₀ sont respectivement les valeurs de longueur d'onde de résonance et de facteur de qualité pour la résonance individuelle du résonateur de Fabry-Pérot. Ainsi, un profil de réponse spectrale du filtre, en fonction de la longueur d'onde du rayonnement incident, résulte d'une superposition d'au moins la résonance individuelle de chaque résonateur de Fabry-Pérot avec chaque résonance de couplage de chaque groupe de structures de Fabry-Pérot. Ce profil peut alors posséder une transition plus raide entre un domaine spectral de coupure et un domaine spectral de fenêtre, par rapport à un filtre de référence qui comporterait le(s) même(s) résonateur(s) de Fabry-Pérot mais qui serait dépourvu des structures de Fabry-Pérot couplées. Eventuellement, la superposition peut aussi comprendre des contributions des résonances individuelles des structures de Fabry-Pérot de chaque groupe.

Avantageusement, pour de tels filtres à superposition de résonances, chaque résonateur de Fabry-Pérot, notamment une épaisseur d'un volume interne de ce résonateur, mesurée perpendiculairement à une direction d'onde stationnaire se produisant dans ce volume interne, peut être conçu pour que la valeur de facteur de qualité de la résonance individuelle de ce résonateur soit inférieure à 30. Simultanément, la valeur du facteur de qualité qui est associé à la longueur d'onde de résonance de couplage située dans l'intervalle [λᵣ₀·(1-10/Q₀) ; λᵣ₀·(1+10/Q₀)] peut être supérieure à 30. De cette façon, la résonance de couplage modifie localement le profil spectral qui est produit par la résonance individuelle du résonateur de Fabry-Pérot. Il est ainsi possible d'élaborer, à la demande et précisément, un filtre dont le profil de réponse spectrale corresponde à un cahier des charges imposé.

Possiblement, le résonateur de Fabry-Pérot peut être empilé sur l'une des structures de Fabry-Pérot du groupe, selon une direction d'empilement qui est perpendiculaire à la face du support. De tels modes de réalisation de l'invention sont encore faciles à fabriquer, et peuvent permettre de réduire une réflexion résiduelle du filtre dans sa fenêtre de sélection spectrale. Avantageusement, une portion de couche métallique peut être commune au résonateur de Fabry-Pérot et à la structure de Fabry-Pérot sur laquelle il est empilé. Cette portion de couche métallique commune constitue alors l'une des portions de surfaces métalliques de la structure de Fabry-Pérot concernée.

Enfin, un second aspect de l'invention concerne un procédé de filtrage spectral d'un rayonnement électromagnétique, qui est mis en œuvre en utilisant au moins un filtre spectral conforme au premier aspect de l'invention. Pour cela, le rayonnement à filtrer doit avoir des valeurs de longueur d'onde qui sont plus grandes que l'espace intermédiaire, mesuré parallèlement à la face du support, qui existe entre deux structures de Fabry-Pérot du filtre qui sont couplées l'une avec l'autre.

Un tel procédé peut être mis en œuvre pour une application qui est sélectionnée parmi une acquisition d'image monochromatique ou multispectrale, une analyse spectroscopique, et une émission sélective de rayonnement produite par un chauffage du filtre.

D'autres particularités et avantages de la présente invention apparaîtront dans la description ci-après d'exemples de réalisation non limitatifs, en référence aux dessins annexés, dans lesquels :
- les figures 1a et 1b sont des vues en section transversale de deux types de structures de Fabry-Pérot telles que connues avant la présente invention ;
- la figure 2a est une vue en section transversale d'un premier mode de réalisation de l'invention, à deux structures de Fabry-Pérot par groupe ;
- la figure 2b est un diagramme de réflectivité obtenu pour le mode de réalisation de l'invention de la figure 2a ;
- la figure 3 est un diagramme montrant des variations de facteurs de qualité pour une résonance individuelle et une résonance de couplage de structures de Fabry-Pérot ;
- la figure 4 est un diagramme tridimensionnel montrant l'évolution d'un spectre de réflectivité en fonction d'une épaisseur de matériau diélectrique, pour des modes de réalisation de l'invention qui sont conformes à la figure 2a ;
- les figures 5a et 5b correspondent aux figures 2a et 2b, respectivement, pour un deuxième mode de réalisation de l'invention, à trois structures de Fabry-Pérot par groupe ;
- la figure 6 est une vue en perspective d'un troisième mode de réalisation de l'invention, à quatre structures de Fabry-Pérot par groupe ;
- la figure 7a est un diagramme de sélectivité spectrale pour un filtre qui est conforme à un perfectionnement de l'invention ; et
- la figure 7b est une vue en section transversale du filtre de la figure 7a.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

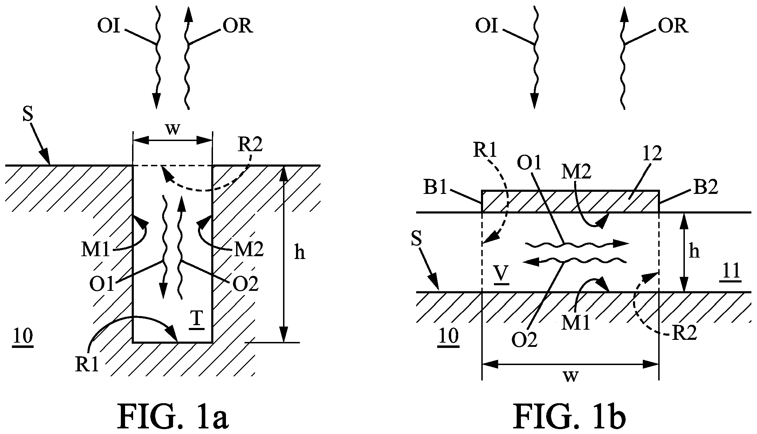

On rappelle d'abord les rôles de plusieurs éléments et paramètres d'une structure de Fabry-Pérot en référence à la figure 1a. Conformément à cette figure, une structure de Fabry-Pérot de type connu consiste en une tranchée T à profil de section rectangulaire, qui est formée dans un substrat 10 formant support. La tranchée T s'étend à partir d'une face plane S du substrat 10. Le substrat 10 est en matériau métallique, par exemple en or. La tranchée T est limitée latéralement par deux portions de surfaces métalliques opposées, M1 et M2, qui relient un fond de la tranchée, noté R1, à une portion de surface R2 superposée à l'ouverture de la tranchée T dans la face S. Le volume interne de la tranchée T est ainsi limité par les portions de surfaces métalliques M1 et M2 selon une direction parallèle à la face S, et simultanément par les portions de surfaces R1 et R2 selon la direction perpendiculaire à la face S. Il est rempli par un milieu diélectrique, par exemple de l'air ou un matériau solide tel que de la silice (SiO₂). De façon connue, lorsqu'une onde de rayonnement électromagnétique Ol est incidente sur la face S, une onde OR est produite en réflexion, dont l'intensité dépend de l'amplitude d'une onde stationnaire qui apparaît dans la tranchée T. Cette onde stationnaire est la superposition de deux composantes d'onde O1 et O2 qui se propagent en sens contraires à l'intérieur de la tranchée T, et qui sont réfléchies alternativement par les portions de surfaces R1 et R2. En outre, l'onde stationnaire est couplée à l'onde incidente Ol et à l'onde réfléchie OR à travers la portion de surface R2. Pour ce type de structures de Fabry-Pérot, la portion de surface R1 n'a qu'une fonction de miroir, et la portion de surface R2 possède les deux fonctions de miroir partiellement réfléchissant et de transmission partielle entre le volume interne de la tranchée T et l'extérieur. De façon connue, la longueur d'onde de résonance d'une telle structure de Fabry-Pérot est principalement déterminée par la longueur du trajet de l'onde stationnaire dans le volume interne de la tranchée T, selon la formule λᵣ ≈ 2·n_{eff}·h, où n_{eff} est l'indice de réfraction effectif du milieu diélectrique dans tranchée T, et h est la profondeur de cette tranchée. Le facteur de qualité de cette structure de Fabry-Pérot dépend du taux d'occupation de la portion de surface R2 dans la face S. Autrement dit, il dépend de la largeur w de la tranchée T.

La figure 1b montre un autre type connu de structure de Fabry-Pérot, qui peut être réalisé sur la face plane S du substrat 10, faisant encore fonction de support. La structure comprend maintenant un empilement, sur la face S, d'une couche d'un milieu diélectrique 11 et d'une portion métallique 12. Par exemple, la couche 11 peut être en carbure de silicium (SiC) ou en silice (SiO₂). Elle est à faces parallèles de sorte que la portion métallique 12 ait une face M2 qui est tournée vers le substrat 10. La structure de Fabry-Pérot est alors constituée par la portion métallique 12, par la partie de la couche 11 qui est recouverte par la portion 12, et par la portion de la face S qui est au droit de la portion 12. Cette portion de la face S est notée M1, car elle possède le même rôle dans la structure de Fabry-Pérot de la figure 1b que la portion de surface métallique M1 dans la structure de Fabry-Pérot de la figure 1a. La face de la portion métallique 12 qui est tournée vers le substrat 10 est notée M2, aussi par analogie avec la figure 1a. Les deux portions de surfaces qui sont issues des bords opposés B1 et B2 de la portion métallique 12, et qui sont perpendiculaires à la face S, ont des fonctions de miroirs semi-réfléchissants vis-à-vis de composantes d'onde qui se propagent parallèlement à la face S entre les portions de surfaces métalliques M1 et M2, pour former une onde stationnaire. Encore par analogie avec la figure 1a, ces composantes d'onde sont notées O1 et O2, mais elles se propagent parallèlement à la face S du substrat 10 dans le cas de la figure 1b, contrairement à la figure 1a. Par analogie toujours, les deux portions de surfaces qui réfléchissent les composantes d'onde O1 et O2, et qui sont issues des bords B1 et B2, sont encore notées R1 et R2 et appelées portions de surfaces réfléchissantes. Les composantes d'onde O1 et O2 qui forment l'onde stationnaire se propagent dans la partie de la couche 11 qui est recouverte par la portion métallique 12. Cette partie de la couche 11 constitue le volume interne de la structure de Fabry-Pérot de la figure 1b, noté V. La longueur d'onde de résonance d'une telle structure de Fabry-Pérot est encore principalement déterminée par la longueur du trajet de l'onde stationnaire dans le volume interne de la structure, correspondant maintenant à la formule λᵣ ≈ 2·n_{eff}·w, où n_{eff} est encore l'indice de réfraction effectif pour le milieu diélectrique dans le volume interne V, mais w désigne maintenant la largeur de ce volume interne parallèlement à la face S, selon la direction de propagation des composantes d'onde O1 et O2 qui forment l'onde stationnaire. Les portions de surface R1 et R2 couplent maintenant ensemble l'onde stationnaire à l'onde incidente Ol et à l'onde réfléchie OR. Il n'est pas nécessaire que la couche 11 se prolonge au-delà des portions de surfaces réfléchissantes R1 et R2, de chaque côté du volume interne V de la structure de Fabry-Pérot. Elle peut être remplacée, à l'extérieur de ce volume interne V, par de l'air ou tout autre matériau diélectrique. Le facteur de qualité de la résonance d'une telle structure de Fabry-Pérot, conforme à la figure 1b, dépend de l'épaisseur h de la couche 11, c'est-à-dire de l'épaisseur du volume interne V mesurée perpendiculairement à la face S, et du (des) milieu(x) qui est (sont) présent(s) à proximité des surfaces réfléchissantes R1 et R2 à l'extérieur du volume interne V. En outre, si l'épaisseur h est supérieure à la valeur limite VL = 0,125·λᵣ/n_{eff}, alors la structure de Fabry-Pérot présente une valeur de réflectivité énergétique qui est supérieure à 0,39 lorsqu'elle reçoit l'onde incidente Ol et que celle-ci possède la valeur λᵣ pour sa longueur d'onde. Dans ce cas, la structure de Fabry-Pérot est dite sous-couplée au milieu de propagation des ondes Ol et OR. Si la longueur d'onde de résonance λᵣ est égale à 5,25 µm (micromètre) et la valeur effective d'indice de réfraction n_{eff} est égale à environ 3,155, alors la valeur limite VL = 0,125·λᵣ/n_{eff} est sensiblement égale à 0,208 µm.

L'invention concerne la constitution d'un filtre spectral à partir de plusieurs structures de Fabry-Pérot qui sont conformes chacune à la figure 1b.

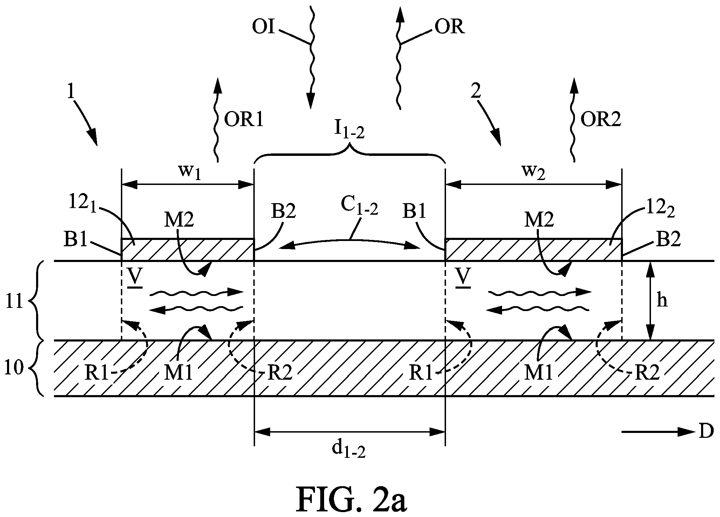

Des premiers modes de réalisation de l'invention peuvent comprendre un groupe de deux structures de Fabry-Pérot, désignées par 1 et 2 dans la figure 2a, et qui sont portées par le même support métallique 10, pouvant être en or, argent, aluminium, etc. Les deux structures 1 et 2 sont juxtaposées selon une direction D, qui est parallèle à la face S du support 10 et à la direction de largeur du volume interne V de chaque structure. Chaque structure 1 (respectivement 2) comprend une portion métallique 12₁ (resp. 12₂), qui est située sur la couche de matériau diélectrique 11, cette dernière pouvant encore être en siliciure de carbone et continue sur toute la face S du support 10. Toutefois, cette continuité de la couche 11 n'est pas indispensable, et il peut être avantageux pour des modes alternatifs de réalisation de l'invention, de modifier la composition de la couche 11 dans certaines zones de la face S, notamment dans le volume interne V de l'une au moins des deux structures 1 et 2, ou dans l'espace qui est intermédiaire entre ces structures. Chacune des structures Fabry-Pérot 1 et 2 étant conforme à la figure 1b, les références R1, R2, M1, M2, B1 et B2 de la figure 1b s'appliquent identiquement pour chaque structure 1 et 2 de la figure 2a. Les deux portions métalliques 12₁ et 12₂ peuvent être chacune du même métal que le support 10. En outre, les notations suivantes concernent séparément l'une ou l'autre des deux structures 1 et 2 :
- λᵣ₁ :: la longueur d'onde de résonance individuelle de la structure de Fabry-Pérot 1,
- Q₁ :: le facteur de qualité de la résonance individuelle de la structure de Fabry-Pérot 1,
- W₁ :: la largeur de la portion métallique 12₁ selon la direction D,
- n_{eff_1} :: l'indice de réfraction effectif pour le milieu diélectrique dans le volume interne V de la structure de Fabry-Pérot 1, occupé par la couche 11 dans l'exemple considéré,
- λᵣ₂ :: la longueur d'onde de résonance individuelle de la structure de Fabry-Pérot 2,
- Q₂ :: le facteur de qualité de la résonance individuelle de la structure de Fabry-Pérot 2,
- W₂ :: la largeur de la portion métallique 12₂ selon la direction D,
- n_{eff_2} :: l'indice de réfraction effectif pour le milieu diélectrique dans le volume interne V de la structure de Fabry-Pérot 2, occupé par la couche 11 dans l'exemple considéré, et
- d₁₋₂ :: la distance de séparation entre les deux structures de Fabry-Pérot 1 et 2, mesurée selon la direction D entre les portions métalliques 12₁ et 12₂.

La définition des indices de réfraction effectifs n_{eff1} et n_{eff2} est connue de l'art antérieur, telle qu'elle a été rappelée au début de la présente description. Dans ces conditions : λᵣ₁ ≈ 2·n_{eff_1}·w₁ et λᵣ₂ ≈ 2·n_{eff_2}·w₂. Q₁ et Q₂ sont déterminés notamment par l'épaisseur h de la couche 11, et par son matériau à proximité des surfaces réfléchissantes R1 et R2 de chaque structure 1, 2. Pour le mode de réalisation de l'invention qui est illustré par la figure 2a, h est l'épaisseur de matériau diélectrique qui est commune aux deux structures de Fabry-Pérot 1 et 2, c'est-à-dire h₁=h₂=h où h₁ et h₂ désignent les épaisseurs de matériau diélectrique respectivement dans les structures de Fabry-Pérot 1 et 2. Toutefois, dans d'autres modes de réalisation de l'invention, il est possible que les épaisseurs de matériau diélectrique h₁ et h₂, dans les deux structures de Fabry-Pérot 1 et 2, soient différentes. L'épaisseur de chaque portion métallique 12₁, 12₂ peut être 50 nm (nanomètre) par exemple, et l'épaisseur de la couche 11 de matériau diélectrique peut être 280 nm par exemple, ces épaisseurs étant mesurées perpendiculairement à la face S.

Pour des modes de réalisation de l'invention à motif unidimensionnel, les portions métalliques 12₁ et 12₂ peuvent être des rubans qui s'étendent perpendiculairement au plan de la figure 2a, et le groupe des deux structures de Fabry-Pérot 1 et 2, avec les parties associées de la couche 11 ou des milieux diélectriques utilisés, peut former un motif qui est répété périodiquement selon la direction D. On décrit dans la suite une résonance de couplage que produit ce motif isolément, mais l'Homme du métier comprendra que des couplages supplémentaires peuvent apparaître entre deux structures de Fabry-Pérot qui sont voisines sur la face S tout en appartenant à des répétitions différentes du motif.

Les quatre conditions suivantes sont nécessaires pour l'apparition de la résonance de couplage :
λᵣ₁ ≠ λᵣ₂ : une différence entre les longueurs d'onde des résonances individuelles des deux structures de Fabry-Pérot 1 et 2 peut résulter de deux valeurs différentes qui sont utilisées pour les largeurs de rubans w₁ et w₂. Par exemple : w₁ = 400 nm et w₂ = 495 nm. Alternativement ou en combinaison, deux valeurs différentes peuvent être utilisées pour l'indice de réfraction effectif de la couche 11 dans les volumes internes V respectifs des structures 1 et 2 : n_{eff_1} ≠ n_{eff_2}. Une telle différence d'indice de réfraction peut être obtenue par des compositions, dopages ou taux de remplissage de la couche 11 qui sont différents entre les deux structures 1 et 2. Alternativement ou en combinaison encore, une valeur de coefficient d'absorption propre à chaque structure de Fabry-Pérot peut être utilisée pour varier sa longueur d'onde de résonance individuelle ;
les deux intervalles de longueur d'onde: [λᵣ₁·(1-3/Q₁) ; λᵣ₁·(1+3/Q₁)] qui comprend la longueur d'onde de résonance individuelle de la structure 1, et [λᵣ₂·(1-3/Q₂) ; λᵣ₂·(1+3/Q₂)] qui comprend la longueur d'onde de résonance individuelle de la structure 2, ont un recouvrement. Autrement dit, ils ne sont pas disjoints. Cette condition peut être satisfaite en sélectionnant les valeurs de λᵣ₁ et λᵣ₂ pour qu'elles soient suffisamment proches, ou en sélectionnant les paramètres structuraux du motif, notamment l'épaisseur h de la couche 11, pour que les valeurs de Q₁ et Q₂ soient suffisamment faibles ;
l'épaisseur h de la couche 11 de matériau diélectrique est supérieure aux deux valeurs limites VL₁ = 0,125·λᵣ₁/n_{eff_1} et VL₂ = 0,125·λᵣ₂/n_{eff_2}, signifiant que les deux structures de Fabry-Pérot sont sous-couplées au milieu extérieur de propagation de l'onde Ol ; et
la distance de séparation d₁₋₂ entre les deux structures 1 et 2 est suffisamment faible, notamment inférieure à la longueur d'onde de résonance de couplage comme expliqué en détail plus loin. d₁₋₂ correspond à la largeur de l'espace intermédiaire I₁₋₂ qui sépare les structures 1 et 2, tel que représenté sur la figure 2a.

Dans la figure 2a, C₁₋₂ désigne le couplage qui est ainsi produit entre les structures de Fabry-Pérot 1 et 2.

Alors dans ces conditions, deux ondes supplémentaires sont issues de l'onde Ol qui est incidente sur l'ensemble des deux structures 1 et 2, en plus de l'onde qui résulte de la réflexion de l'onde Ol sur la face S du support 10 :
- une première onde supplémentaire, notée OR1, qui émerge de la structure de Fabry-Pérot 1, et qui résulte d'une superposition de plusieurs composantes d'onde dont au moins une a effectué un aller-retour à l'intérieur de la structure de Fabry-Pérot 2. Autrement dit, l'amplitude de l'onde supplémentaire OR1 dépend du couplage entre le volume interne V de la structure 1 et l'espace libre dont provient l'onde incidente Ol. En outre, au moins une composante de cette onde supplémentaire OR1 s'est propagée dans le volume interne V de la structure 2, en y effectuant au moins un aller-retour parallèlement à la direction D, puis a traversé l'espace intermédiaire I₁₋₂ à partir de la structure 2 jusqu'à la structure 1, avant d'être retransmise dans l'espace libre par la structure 1. Des composantes d'onde additionnelles, qui peuvent participer en outre à constituer l'onde supplémentaire OR1, peuvent avoir effectué des combinaisons quelconques d'allers-retours successifs dans les volumes internes V des deux structures 1 et 2, avec des traversées de l'espace intermédiaire I₁₋₂ à chaque passage entre un aller-retour dans le volume interne V de l'une des structures 1 ou 2 et un aller-retour dans le volume interne V de l'autre structure, avant d'être retransmises chacune dans l'espace libre par la structure 1 ; et
- une seconde onde supplémentaire, notée OR2, qui émerge de la structure de Fabry-Pérot 2, et qui résulte d'une superposition de plusieurs autres composantes d'onde dont au moins une a effectué un aller-retour à l'intérieur de la structure de Fabry-Pérot 1. Autrement dit, l'amplitude de l'onde supplémentaire OR2 dépend du couplage entre le volume interne V de la structure 2 et l'espace libre dont provient l'onde incidente Ol. En outre, au moins une composante de l'onde supplémentaire OR2 s'est propagée dans le volume interne V de la structure 1, en y effectuant au moins un aller-retour parallèlement à la direction D, puis a traversé l'espace intermédiaire I₁₋₂ à partir de la structure 1 jusqu'à la structure 2, avant d'être retransmise dans l'espace libre par la structure 2. De même que pour l'onde supplémentaire OR1, d'autres composantes d'onde additionnelles, qui peuvent participer en outre à constituer l'onde supplémentaire OR2, peuvent avoir effectué des combinaisons quelconques d'allers-retours dans les volumes internes V des deux structures 1 et 2, avec des traversées de l'espace intermédiaire I₁₋₂ à chaque passage entre un aller-retour dans le volume interne V de l'une des structures 1 ou 2 et un aller-retour dans le volume interne V de l'autre structure, avant d'être retransmises chacune dans l'espace libre par la structure 2.

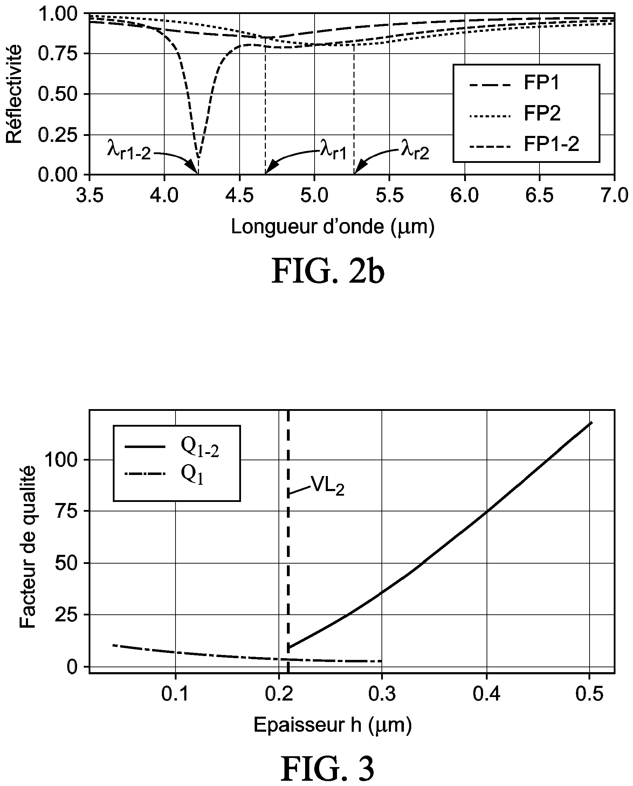

Les deux ondes supplémentaires OR1 et OR2 sont dues au couplage C₁₋₂ entre les structures de Fabry-Pérot 1 et 2. Alors, pour une valeur particulière de la longueur d'onde de l'onde Ol, l'onde qui résulte de la réflexion de l'onde Ol sur la face S du support 10, la première onde supplémentaire OR1 et la seconde onde supplémentaire OR2 forment une interférence constructive qui participe à constituer l'onde réfléchie OR. Le diagramme de la figure 2b compare des courbes de réflectivité spectrale mesurées respectivement pour un premier support 10 muni des structures de Fabry-Pérot 1 uniquement (courbe notée FP1 et correspondant à w₁ = 400 nm), un deuxième support 10 muni des structures de Fabry-Pérot 2 uniquement (courbe notée FP2 et correspondant à w₂ = 495 nm), et un troisième support 10 muni des structures de Fabry-Pérot 1 et 2 alternées (courbe notée FP1-2 et correspondant à la figure 2a). La valeur d'angle d'incidence utilisée dans les trois cas est 10° (degré), égale à la valeur d'angle de réflexion de l'onde OR, et l'onde incidente Ol est polarisée rectilignement avec son champ magnétique parallèle à la direction longitudinale des rubans qui constituent les portions métalliques 12₁ et 12₂. Dans les trois cas, le support 10 est en or avec une épaisseur de 200 nm, les portions métalliques sont aussi en or avec des épaisseurs de 50 nm, et la couche 11 est continue et uniforme en siliciure de carbone avec une épaisseur de 280 nm. Les valeurs de w₁ et w₂ sont celles données plus haut, et les distances de séparation inter-rubans sont égales à 437 nm dans les trois cas. Dans ces conditions, la résonance individuelle des structures de Fabry-Pérot 1 possède les caractéristiques suivantes : λᵣ₁ ≈ 4,65 µm et une valeur minimale de réflectivité spectrale supérieure à 0,80 (cf. courbe FP1), et la résonance individuelle des structures de Fabry-Pérot 2 possède les autres caractéristiques : λ₂ ≈ 5,25 µm et une valeur minimale de réflectivité spectrale qui est aussi supérieure ou égale à 0,80 (cf. courbe FP2). La valeur de 280 nm pour l'épaisseur h de la couche 11 est supérieure aux deux valeurs limites VL₁ = 0,125·λᵣ₁/n_{eff_1} et VL₂ = 0,125·λᵣ₂/n_{eff_2} (n_{eff_1} = n_{eff_2} dans le mode de réalisation décrit) respectivement égales à 184 nm et 208 nm, assurant que les deux structures de Fabry-Pérot 1 et 2 sont utilisées chacune en condition de sous-couplage avec le milieu de propagation externe. La résonance supplémentaire, qui est apportée par le couplage entre les structures 1 et 2, apparaît lorsque la longueur d'onde de l'onde incidente Ol possède la valeur de 4,23 µm (cf. courbe FP1-2). Il s'agit de la longueur d'onde de résonance de couplage, qui est notée λᵣ₁₋₂. Le minimum associé pour la réflectivité spectrale est d'environ 0,13, correspondant à une valeur de 22 pour le facteur de qualité Q₁₋₂ qui est associé à la résonance de couplage. Le support 10 de la figure 2a, avec les structures 1 et 2, forme alors un filtre spectral qui est efficace en réflexion. Pour ce premier exemple, la valeur du pas spatial de reproduction du motif formé par les deux structures de Fabry-Pérot 1 et 2 est 1770 nm.

De façon générale, pour que le couplage entre les deux structures de Fabry-Pérot 1 et 2 soit suffisant pour produire la résonance de couplage, la distance de séparation d₁₋₂ doit être inférieure à la valeur de la longueur d'onde de résonance de couplage λᵣ₁₋₂. Dans le cas présent, d₁₋₂ est environ égale à 437 nm.

A toutes valeurs et compositions identiques en dehors des largeurs w₁, w₂ et de la distance de séparation d₁₋₂, la longueur d'onde de résonance de couplage λᵣ₁₋₂ devient égale à 4,61 µm lorsque w₁ = 495 nm, w₂ = 600 nm et d₁₋₂ = 337 nm. La valeur minimale de réflectivité est alors d'environ 0,21, obtenue lorsque la longueur d'onde de l'onde incidente Ol est égale à λᵣ₁₋₂. Ainsi, une sélection appropriée des valeurs de largeur des rubans métalliques permet d'ajuster la longueur d'onde de résonance de couplage à une valeur désirée.

Le diagramme de la figure 3 montre les variations du facteur de qualité Q₁₋₂ de la résonance de couplage (courbe en trait continu) qui résultent de modifications de l'épaisseur h de la couche 11, par rapport au mode de réalisation des figures 2a et 2b. Au-delà de la valeur limite d'épaisseur VL₂ = max(VL₁ ; VL₂) = 0,208 µm environ pour la couche 11, la valeur du facteur de qualité Q₁₋₂ de la résonance de couplage augmente continûment, en atteignant 250 environ pour la valeur de 800 nm pour l'épaisseur h de la couche 11. Ainsi, une sélection appropriée de l'épaisseur h de la couche 11 permet d'ajuster la largeur et la profondeur du minimum de réflectivité spectrale qui est associé à la résonance de couplage. A titre de comparaison, le diagramme de la figure 3 montre aussi la variation du facteur de qualité Q₁ de la résonance individuelle d'une seule structure de Fabry-Pérot, lorsque l'épaisseur h de la couche 11 varie et lorsque la largeur w du ruban qui forme la portion métallique 12 est constante et égale à 495 nm (courbe en trait interrompu). Le facteur de qualité Q₁ de la résonance individuelle est une fonction décroissante de l'épaisseur h de la couche 11, alors que le facteur de qualité Q₁₋₂ de la résonance de couplage est une fonction croissante de cette épaisseur h.

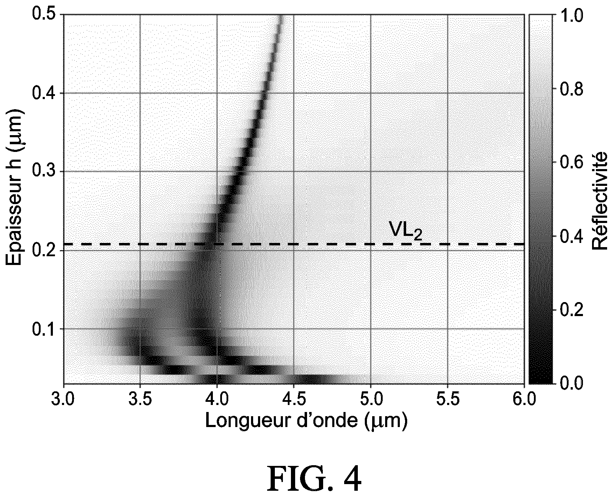

L'axe horizontal du diagramme de la figure 4 repère les valeurs de longueur d'onde de l'onde incidente Ol, l'axe vertical repère les valeurs de l'épaisseur h de la couche 11 de matériau diélectrique, et la troisième dimension, indiquée par l'échelle de niveaux de gris qui est disposée à droite du diagramme, repère les valeurs de réflectivité énergétique du filtre spatial des figures 2a et 2b, lorsque seule l'épaisseur h varie. La résonance de couplage, qui est produite par l'interférence à trois ondes, existe lorsque l'épaisseur h est supérieure à VL₂ = max(VL₁ ; VL₂) = 0,208 µm environ, et est associée à un minimum de réflectivité énergétique qui est étroit, correspondant à des valeurs élevées du facteur de qualité Q₁₋₂. Lorsque l'épaisseur h est inférieure à cette valeur limite, deux résonances séparées sont visibles, qui correspondent aux résonances individuelles respectives des structures de Fabry-Pérot 1 et 2. Les variations des valeurs de longueur d'onde de résonance λᵣ₁ et λᵣ₂ qui sont visibles dans cette partie du diagramme sont dues aux variations spectrales de l'indice de réfraction effectif du matériau diélectrique de la couche 11. Les filtres spectraux qui sont décrits dans l'article intitulé «Plasmonic nano-antennas for spectral emissivity engineering» déjà cité plus haut, de M. Makhsiyan et al., Proc. of SPIE, Vol. 9502, 2015, correspondent tous à la situation où l'épaisseur h de la couche de diélectrique est inférieure à max(VL₁ ; VL₂), où aucune résonance de couplage due à l'interférence à trois ondes n'existe. Le spectre de réflectivité énergétique qui est alors obtenu est sensiblement égal au produit des spectres respectifs de résonance individuelle des deux structures de Fabry-Pérot.

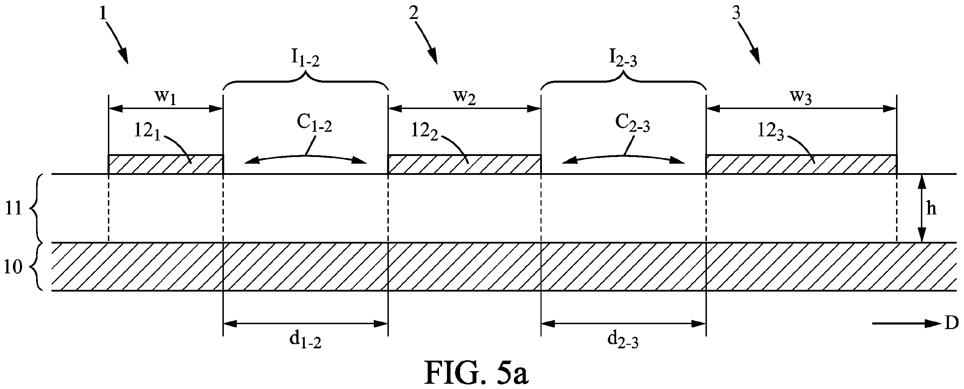

Dans le mode de réalisation de la figure 5a, chaque groupe de structures de Fabry-Pérot comprend trois structures, notées 1, 2 et 3. Les portions métalliques respectives de ces trois structures de Fabry-Pérot, en forme de rubans parallèles dont la direction longitudinale commune est encore perpendiculaire au plan de la figure, sont référencées 12₁, 12₂ et 12₃. Leurs valeurs respectives de largeur sont w₁ = 405 nm, w₂ = 500 nm et w₃ = 600 nm, avec le pas spatial de répétition du motif formé par les trois structures de Fabry-Pérot 1, 2 et 3 qui est égal à 2540 nm. d₁₋₂ est la distance de séparation entre les structures 1 et 2 à travers l'espace intermédiaire I₁₋₂, par exemple égale à environ 300 nm, et d₂₋₃ est la distance de séparation entre les structures 2 et 3 à travers l'espace intermédiaire I₂₋₃, par exemple aussi égale à 300 nm. C₁₋₂ désigne le couplage qui en résulte entre les structures de Fabry-Pérot 1 et 2, et C₂₋₃ celui entre les structures de Fabry-Pérot 2 et 3. Les trois portions métalliques 12₁, 12₂ et 12₃ peuvent encore être du même métal que le support 10, de sorte que la valeur de l'indice de réfraction effectif du matériau diélectrique est la même pour les trois structures de Fabry-Pérot 1, 2 et 3.

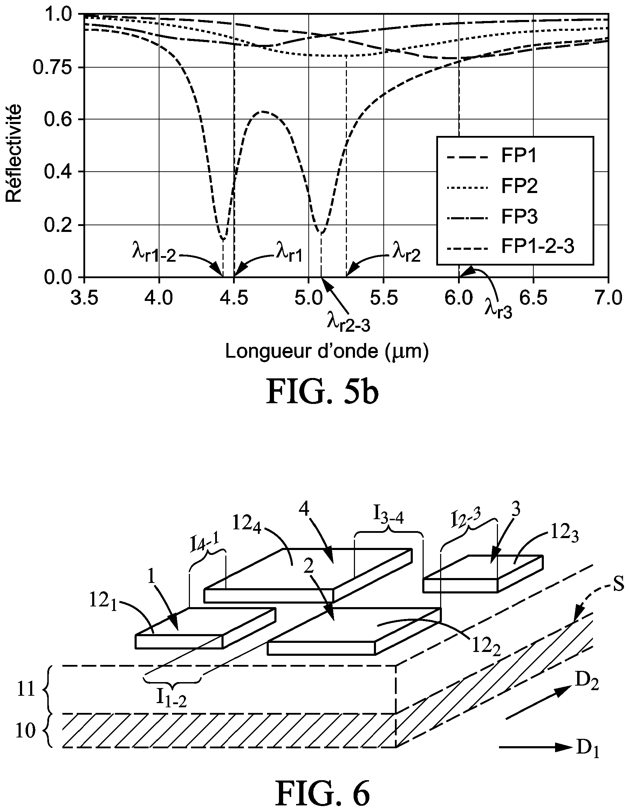

Le diagramme de la figure 5b montre les courbes de réflectivité spectrale qui ont été mesurées respectivement pour un premier support 10 muni de structures de Fabry-Pérot 1 uniquement (courbe notée FP1 et correspondant à w₁ = 405 nm), un deuxième support 10 muni de structures de Fabry-Pérot 2 uniquement (courbe notée FP2 et correspondant à w₂ = 500 nm), un troisième support 10 muni de structures de Fabry-Pérot 3 uniquement (courbe notée FP3 et correspondant à w₃ = 600 nm), et le support 10 muni des structures de Fabry-Pérot 1, 2 et 3 alternées (courbe notée et FP1-2-3 correspondant à la figure 5a). Les conditions d'incidence et de polarisation de l'onde incidente Ol sont les mêmes que celles pour le diagramme de la figure 2b. Les valeurs de longueur d'onde de résonance individuelle sont λᵣ₁ ≈ 4,5 µm pour la structure 1 (cf. courbe FP1), λᵣ₂ ≈ 5,2 µm pour la structure 2 (cf. courbe FP2), et λᵣ₃ ≈ 6,0 µm pour la structure 3 (cf. courbe FP3), avec des valeurs minimales de réflectivité qui sont toutes supérieures à 0,80 pour ces trois résonances individuelles. Autrement dit, la condition de l'épaisseur h de la couche 11 qui doit être supérieure aux trois valeurs limites 0,125·λᵣ₁/n_{eff}, 0,125·λᵣ₂/n_{eff} et 0,125·λᵣ₃/n_{eff} est satisfaite. Le filtre de la figure 5a dont le motif est formé par le groupe des trois structures de Fabry-Pérot 1, 2 et 3, présente alors deux résonances de couplage (cf. courbe FP1-2-3) : une première résonance de couplage pour la valeur de longueur d'onde λᵣ₁₋₂ ≈ 4,43 µm, associée à une première valeur Q₁₋₂ de facteur de qualité égale à 15, et une seconde résonance de couplage pour la valeur de longueur d'onde λᵣ₂₋₃ ≈ 5,12 µm, associée à une seconde valeur Q₂₋₃ de facteur de qualité égale à 11. La première résonance de couplage, correspondant à λᵣ₁₋₂ et Q₁₋₂, provient du couplage C₁₋₂ entre les rubans 1 et 2 à travers l'espace intermédiaire I₁₋₂, et la seconde résonance de couplage, correspondant à λᵣ₂₋₃ et Q₂₋₃, provient du couplage C₂₋₃ entre les rubans 2 et 3 à travers l'espace intermédiaire I₂₋₃. Les structures 1 et 3, même lorsqu'elles sont voisines en appartenant à des motifs successifs, ne sont pas couplées entre elles du fait de leurs valeurs de longueur d'onde de résonance individuelle qui sont trop éloignées l'une de l'autre.

La figure 6 montre un autre mode de réalisation de l'invention, à deux directions de variation du motif qui sont notées D₁ et D₂. Par exemple, un groupe de quatre structures de Fabry-Pérot 1-4, qui sont agencées en matrice 2 × 2 parallèlement aux directions D₁ et D₂, peut être utilisé en tant que motif qui est reproduit périodiquement selon ces deux directions. Chaque structure de Fabry-Pérot 1-4 peut être identifiée par une portion de couche métallique respective 12₁-12₄, qui est agencée sur la couche de matériau diélectrique 11, elle-même sur la face S du support métallique 10. Deux au moins des structures de Fabry-Pérot 1-4 sont différentes, par exemple par les dimensions des portions de couche métallique 12₁-12₄. A titre d'exemple mais de façon non limitative, chaque portion de couche métallique 12₁-12₄ peut être un carré dont la longueur de côté est sélectionnée parmi les valeurs 640 nm, 680 nm, 780 nm et 840 nm, pour un pas de reproduction du motif selon les directions D₁ et D₂ qui peut être égal à 2200 nm. Les espaces intermédiaires entre structures de Fabry-Pérot qui voisines sont I₁₋₂ entre les structures 1 et 2, I₂₋₃ entre les structures 2 et 3, I₃₋₄ entre les structures 3 et 4, et I₄₋₁ entre les structures 4 et 1. Alors, la modification des longueurs des côtés des portions 12₁-12₄ et des largeurs des espaces intermédiaires entre celles-ci permet d'ajuster les valeurs des longueurs d'onde de résonances de couplage, ainsi que les valeurs de facteurs de qualité et de minima de réflectivité spectrale qui leurs sont associées. De façon générale, une résonance de couplage est associée séparément à chaque paire de structures de Fabry-Pérot du motif. Toutefois, lorsque deux de ces structures de Fabry-Pérot ont des valeurs de longueur d'onde de résonance individuelle qui sont trop éloignées l'une de l'autre, ces deux structures ne sont pas couplées entre elles. Il est notamment possible de répartir les quatre structures de Fabry-Pérot dans la matrice 2 × 2 du motif, de sorte que deux structures qui sont sur une même diagonale dans la matrice 2 × 2 ne soient pas couplées entre elles pour cette raison.

Dans encore d'autres modes de réalisation de l'invention, qui peuvent aussi posséder une répartition des structures de Fabry-Pérot en matrice 2 × 2 à l'intérieur d'un motif bidimensionnel, les portions de couche métallique 12₁-12₄ peuvent avoir des formes rectangulaires, circulaires, elliptiques, en croix, en équerre, etc..., parallèlement à la face S, selon la différence de réponse qui est souhaitée pour le filtre entre deux polarisations orthogonales effectives pour l'onde incidente Ol. L'Homme du métier sait sélectionner ces formes en fonction de la sélectivité qui est désirée pour le filtre par rapport à la polarisation de l'onde incidente Ol. De même, à partir de la présente description, il saura prendre en compte l'effet des distances de séparation entre structures de Fabry-Pérot sur la sélectivité du filtre par rapport à la polarisation de l'onde Ol. En outre, la composition et le matériau de la couche 11 dans les espaces intermédiaires I₁₋₂, I₂₋₃, I₃₋₄ et I₄₋₁ peuvent être variés pour ajuster le couplage entre deux structures de Fabry-Pérot voisines.

De façon générale, l'Homme du métier comprendra à la lumière des modes de réalisation de l'invention qui viennent d'être décrits, qu'un filtre conforme à l'invention peut être formé par répétition d'un motif quelconque de plusieurs structures de Fabry-Pérot, sans limitation quant au nombre de structures qui forment le motif, ni leur disposition dans ce motif. La condition est que deux au moins de ces structures de Fabry-Pérot soient couplées en ayant des constitutions qui sont conformes à la figure 1b. Le nombre important de degrés de liberté qui en résulte permet de concevoir à la demande un filtre dont le profil de réponse spectrale correspond à un cahier des charges quelconque.

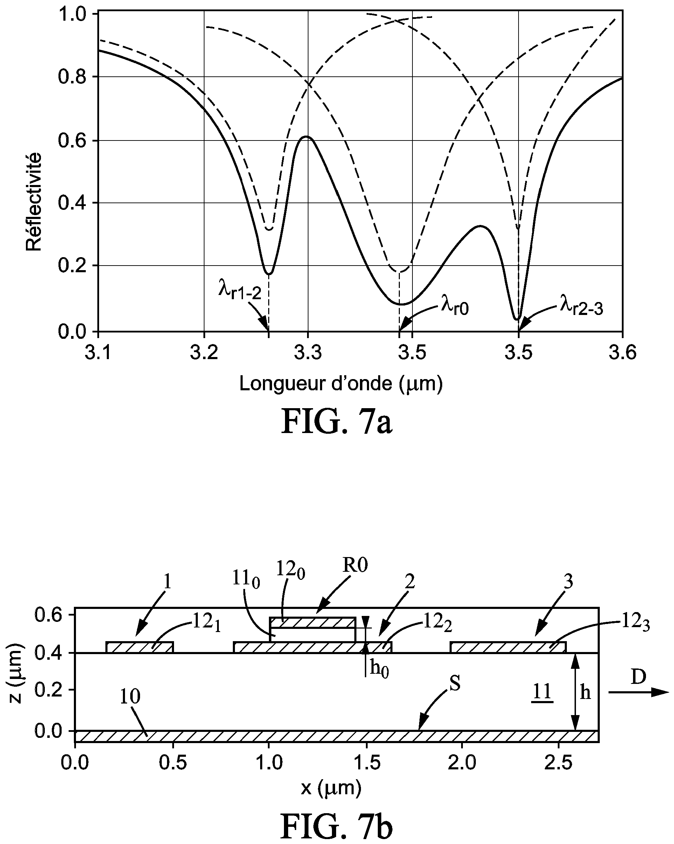

On décrit maintenant une façon empirique de concevoir un filtre conforme à l'invention, dont le profil de réponse spectrale comporte une transition maîtrisée entre un domaine spectral de coupure et un domaine spectral de fenêtre. Pour cela, le filtre peut être une association entre au moins un résonateur de Fabry-Pérot, et au moins un groupe de plusieurs structures de Fabry-Pérot couplées tel que décrit précédemment. On entend alors par résonateur de Fabry-Pérot une structure additionnelle de Fabry-Pérot qui est utilisée au sein du filtre pour sa résonance individuelle, par opposition aux structures de Fabry-Pérot couplées qui sont utilisées pour leur(s) résonance(s) de couplage. En général, le profil spectral de la résonance individuelle du résonateur de Fabry-Pérot est plus large, sur un axe de longueur d'onde, que le profil spectral de la résonance de couplage de deux structures de Fabry-Pérot qui sont couplées selon l'invention. Or le profil spectral du filtre résulte d'une combinaison additive des absorptions énergétiques que provoquent toutes les résonances - individuelles ou de couplage. Alors, en ajustant les paramètres respectifs des structures de Fabry-Pérot couplées et du résonateur de Fabry-Pérot, il est possible de superposer, sur l'axe de longueur d'onde de l'onde incidente Ol, au moins une résonance de couplage avec un côté de la résonance individuelle du résonateur de Fabry-Pérot. Autrement dit, la valeur de la longueur d'onde de la résonance de couplage, notée λᵣ₁₋₂, peut être différente de λᵣ₀ mais à l'intérieur de l'intervalle [λᵣ₀·(1-10/Q₀) ; λᵣ₀·(1+10/Q₀)], où λᵣ₀ et Q₀ sont respectivement les valeurs de longueur d'onde de résonance et de facteur de qualité pour la résonance individuelle du résonateur de Fabry-Pérot. Les structures couplées permettent ainsi de modifier localement le profil spectral du résonateur de Fabry-Pérot, lorsque le facteur de qualité de la résonance de couplage est supérieur, voire très supérieur, au facteur de qualité du résonateur de Fabry-Pérot. A titre d'illustration, le diagramme de la figure 7a montre la réponse spectrale en réflexion d'un tel filtre qui combine un résonateur de Fabry-Pérot et trois structures de Fabry-Pérot couplées conformément à la figure 5a. Dans cet exemple, la longueur d'onde de résonance individuelle λᵣ₀ du résonateur de Fabry-Pérot est égale à environ 3,39 µm, avec la valeur de 20 pour le facteur de qualité Q₀ correspondant, la première longueur d'onde de résonance de couplage λᵣ₁₋₂ est égale à environ 3,26 µm, avec la valeur de 60 pour le facteur de qualité Q₁₋₂ correspondant, et la seconde longueur d'onde de résonance de couplage λᵣ₂₋₃ est égale à environ 3,50 µm, aussi avec la valeur de 60 pour le facteur de qualité Q₂₋₃ correspondant.

La figure 7b montre le motif d'un tel filtre. Ce motif comprend une partie du support 10, une partie de la couche 11 et les structures de Fabry-Pérot 1-3 de la figure 5a, avec leurs portions métalliques respectives 12₁, 12₂ et 12₃. Il comprend en outre au moins un résonateur de Fabry-Pérot additionnel, qui peut être empilé sur l'une des structures 1-3, par exemple sur la structure 2. Ce résonateur additionnel est désigné par la référence R0, et peut être avantageusement aussi du type décrit en référence à la figure 1b. Dans ce cas, il peut être constitué par un ruban de matériau diélectrique supplémentaire 11₀ qui est disposé sur la portion de couche métallique 12₂, et par une portion de couche métallique supplémentaire 12₀ qui est disposée sur ce ruban de matériau diélectrique 11₀. La portion métallique 12₂ est ainsi partagée entre ce résonateur de Fabry-Pérot R0 et la structure de Fabry-Pérot 2. Le ruban 11₀ peut encore être en siliciure de carbone, et la portion 12₀ peut encore être en or. La direction horizontale de la figure 7b comporte un axe de dimension spatiale, noté x, pour repérer les largeurs des rubans qui forment les portions 12₁, 12₂, 12₃ et 12₀, ainsi que les distances de séparation entre ceux-ci. La direction verticale de la figure 7b comporte un autre axe de dimension spatiale, noté z, pour repérer les épaisseurs de la couche 11, des portions 12₁, 12₂, 12₃ et 12₀, ainsi que du ruban de matériau diélectrique supplémentaire 11₀. Ce motif est répété périodiquement selon la direction D sur la face S du support 10, recouverte par la couche 11, pour former le filtre. Pour le mode de réalisation de la figure 7a, l'épaisseur h₀ du ruban de matériau diélectrique supplémentaire 11₀ est d'environ 80 nm, et la largeur de la portion de couche métallique 12₀ selon la direction D est d'environ 450 nm.

L'Homme du métier comprendra alors qu'un profil spectral de filtrage qui est plus élaboré que celui de la figure 7a, notamment un profil spectral de filtrage qui possède une forme quasi-rectangulaire, peut être obtenu selon l'invention en utilisant un motif de structures de Fabry-Pérot à plus de trois structures.

Un tel filtre peut avoir de multiples applications, notamment en imagerie et en spectroscopie, selon des modes de mise en œuvre qui sont bien connus de l'Homme du métier.

Une application supplémentaire peut être une émission thermique sélective de rayonnement électromagnétique. Pour cela, le filtre peut être chauffé, ou appliqué sur un bloc de matériau qui est chauffé. Alors, une émission de rayonnement électromagnétique se produit, dont le spectre est limité à l'intérieur de la (des) fenêtre(s) de sélection spectrale du filtre, et dont l'intensité d'émission dépend de la température du filtre.

Enfin, il est entendu que l'invention peut être mise en œuvre en modifiant de nombreux aspects secondaires des modes de réalisation qui ont été décrits en détail ci-dessus. En particulier, ces modes de réalisation décrits ont été conçus pour des fonctions de filtrage qui sont efficaces en réflexion. Il est possible d'appliquer l'invention à des modes de réalisation adaptés pour produire des fonctions de filtrage qui sont efficaces en transmission. Enfin, toutes les valeurs numériques qui ont été citées ne l'ont été qu'à titre d'illustration, et peuvent être modifiées en fonction de l'application prévue pour chaque filtre.

## Revendications

1. Filtre spectral comprenant au moins un groupe de plusieurs structures de Fabry-Pérot (1, 2) qui sont portées conjointement par une face (S) d'un support (10) du filtre, chaque structure de Fabry-Pérot comprenant deux portions de surfaces réfléchissantes (R1, R2) qui sont disposées en vis-à-vis, parallèles l'une à l'autre, et séparées l'une de l'autre à l'intérieur de la structure par un milieu diélectrique,
chacune des structures de Fabry-Pérot (1, 2) du groupe étant dimensionnée de sorte qu'une composante d'onde de rayonnement électromagnétique puisse se propager entre les deux portions de surfaces réfléchissantes (R1, R2) de ladite structure, de l'une à l'autre, et de sorte qu'une onde stationnaire résulte de réflexions multiples de la composante d'onde qui se produisent en alternance au niveau des deux portions de surfaces réfléchissantes, et une résonance individuelle de ladite structure de Fabry-Pérot correspondant à un maximum d'amplitude de ladite onde stationnaire à l'intérieur de ladite structure lorsqu'une longueur d'onde d'un rayonnement électromagnétique qui est incident sur le filtre varie,
l'une au moins des portions de surfaces réfléchissantes (R1, R2) de chaque structure de Fabry-Pérot (1, 2) du groupe étant séparée d'au moins une des portions de surfaces réfléchissantes de chaque autre structure par un espace intermédiaire (I₁₋₂) parallèlement à la face (S) du support (10),
dans lequel au moins un paramètre qui détermine la résonance individuelle de chaque structure de Fabry-Pérot (1, 2), séparément de chaque autre structure de Fabry-Pérot, possède des valeurs qui sont différentes entre au moins deux des structures du même groupe, de sorte que lesdites au moins deux structures du groupe ait des valeurs respectives de longueur d'onde de résonance individuelle, effectives pour le rayonnement électromagnétique incident sur le filtre, qui sont différentes, et lesdites au moins deux structures aux valeurs différentes de longueur d'onde de résonance individuelle possédant des valeurs respectives d'un facteur de qualité de résonance individuelle telles que, sur un axe de longueur d'onde du rayonnement incident, les intervalles suivants de résonances individuelles : [λᵣᵢ·(1-3/Qᵢ) ; λᵣᵢ·(1+3/Qᵢ)], aient des recouvrements deux-à-deux, où i est un nombre entier qui identifie chaque structure de Fabry-Pérot à l'intérieur du groupe, et λᵣᵢ et Qᵢ sont respectivement les valeurs de longueur d'onde de résonance et de facteur de qualité de la résonance individuelle de la structure de Fabry-Pérot i,
et dans lequel une épaisseur hᵢ du milieu diélectrique, relative à la structure de Fabry-Pérot i en étant mesurée perpendiculairement à une direction de propagation des composantes d'onde qui constituent l'onde stationnaire à l'intérieur de ladite structure de Fabry-Pérot i, est supérieure ou égale à 0,125·λᵣᵢ/n_{eff_i}, n_{eff_i} étant un indice de réfraction effectif pour le milieu diélectrique de la structure de Fabry-Pérot i,
et dans lequel un couplage entre deux des structures de Fabry-Pérot (1, 2) du même groupe, dont les valeurs de longueur d'onde de résonance individuelle sont différentes, est produit par l'espace intermédiaire (I₁₋₂) existant entre lesdites deux structures, possiblement aussi par un matériau présent dans ledit espace intermédiaire, une distance de séparation (d₁₋₂) entre les deux structures de Fabry-pérot ainsi couplées, déterminée par ledit espace intermédiaire et mesurée parallèlement à la face (S) du support (10), étant inférieure à une valeur de longueur d'onde de résonance relative au couplage, dite longueur d'onde de résonance de couplage, qui est effective pour le rayonnement électromagnétique incident sur le filtre, et qui résulte d'une interférence entre au moins trois ondes parmi lesquelles :
- une première onde qui provient d'une réflexion du rayonnement incident sur la face (S) du support (10), ou d'une transmission du rayonnement incident à travers le support ;
- une deuxième onde qui émerge d'une première (1) des structures de Fabry-Pérot du groupe, et qui résulte d'une superposition de plusieurs composantes d'onde parmi lesquelles au moins une desdites composantes d'onde a effectué au moins un aller-retour à l'intérieur d'une seconde (2) des structures de Fabry-Pérot dudit groupe, couplée avec ladite première structure ; et
- une troisième onde qui émerge de ladite seconde (2) des structures de Fabry-Pérot du groupe, et qui résulte d'une autre superposition de plusieurs autres composantes d'onde parmi lesquelles au moins une desdites autres composantes d'onde a effectué au moins un aller-retour à l'intérieur de ladite première (1) des structures de Fabry-Pérot dudit groupe,
le filtre étant **caractérisé en ce que** chaque structure de Fabry-Pérot (1, 2) du groupe comprend deux portions de surfaces métalliques (M1, M2) qui sont parallèles à la face (S) du support (10), et un volume interne (V) qui est limité entre lesdites deux portions de surfaces métalliques perpendiculairement à la face du support, et limité parallèlement à la face du support entre des bords (B1, B2) opposés d'une au moins desdites deux portions de surfaces métalliques de la structure, lesdits deux bords opposés déterminant des positions des portions de surfaces réfléchissantes (R1, R2) de la structure de Fabry-Pérot, de sorte que les composantes d'onde qui contribuent à la résonance de couplage se propagent parallèlement à la face du support à l'intérieur de chacune des structures de Fabry-Pérot couplées du groupe.

2. Filtre spectral selon la revendication 1, dans lequel le paramètre qui détermine la résonance individuelle de chaque structure de Fabry-Pérot (1, 2) du groupe, séparément de chaque autre structure de Fabry-Pérot dudit groupe, et qui possède des valeurs qui sont différentes entre deux des structures qui sont couplées l'une avec l'autre, est l'un des paramètres suivants ou une combinaison de plusieurs d'entre eux :
- une largueur (w₁, w₂) du volume interne (V) de chaque structure (1, 2), telle que mesurée parallèlement à la face (S) du support (10) entre les portions de surfaces réfléchissantes (R1, R2) de ladite structure,
- un indice de réfraction du milieu diélectrique dans le volume interne (V) de chaque structure (1, 2),
- un taux de remplissage et/ou une composition du milieu diélectrique dans le volume interne (V) de chaque structure (1, 2), et
- un coefficient d'absorption du rayonnement électromagnétique par chaque structure (1, 2).

3. Filtre spectral selon la revendication 1 ou 2, dans lequel chaque structure de Fabry-Pérot (1, 2) du groupe, notamment une épaisseur (h) du volume interne (V) entre les deux portions de surfaces métalliques (M1, M2) de ladite structure, mesurée perpendiculairement à la face (S) du support (10), est conçue pour que la valeur du facteur de qualité de résonance individuelle de ladite structure soit inférieure à 20,
et dans lequel le groupe de structures de Fabry-Pérot (1, 2), notamment l'espace intermédiaire (I₁₋₂) entre deux des structures dudit groupe qui sont couplées, est conçu pour qu'un facteur de qualité qui est associé à la résonance de couplage soit supérieur à 20, préférablement supérieur à 70, voire supérieur à 150.

4. Filtre spectral selon l'une quelconque des revendications précédentes, dans lequel pour chaque structure de Fabry-Pérot (1, 2) du groupe, le milieu diélectrique dans le volume interne (V) de ladite structure est constitué par une portion respective d'une couche (11) à faces parallèles et épaisseur uniforme d'un matériau diélectrique solide, ladite couche étant identique pour toutes les structures du groupe.

5. Filtre spectral selon l'une quelconque des revendications précédentes, dans lequel un motif qui comprend les structures de Fabry-Pérot (1, 2) du groupe, telles que séparées par chaque espace intermédiaire (I₁₋₂) entre deux desdites structures à l'intérieur du groupe, est répété de multiples fois sur la face (S) du support (10).

6. Filtre spectral selon la revendication 5, dans lequel une au moins des portions de surfaces métalliques (M1, M2) de chacune des structures de Fabry-Pérot (1, 2) est une face d'un ruban métallique respectif, et dans lequel le motif qui comprend le groupe des structures de Fabry-Pérot est répété de multiples fois, de préférence périodiquement, selon une direction de répétition (D) qui est parallèle à la face (S) du support (10), sous forme de rubans métalliques séparés et parallèles.

7. Filtre spectral selon la revendication 5, dans lequel une au moins des portions de surfaces métalliques (M1, M2) de chaque structure de Fabry-Pérot (1, 2) possède une forme carrée, rectangulaire, circulaire, elliptique, en croix ou en équerre, parallèlement à la face (S) du support (10), et le motif comprenant les structures de Fabry-Pérot du groupe est répété de multiples fois selon deux directions de répétition (D₁, D₂) qui sont distinctes et parallèles à la face du support, de préférence périodiquement, et de préférence les deux directions de répétition étant perpendiculaires entre elles.

8. Filtre spectral selon la revendication 7, dans lequel le motif comprend quatre structures de Fabry-Pérot (1-4) qui sont disposées en matrice 2 × 2 selon les deux directions de répétition (D₁, D₂), formant ainsi six paires de structures de Fabry-Pérot, chaque paire étant associée à un espace intermédiaire (I₁₋₂, I₂₋₃, I₃₋₄, I₄₋₁) entre les deux structures de ladite paire autre que l'espace intermédiaire de chaque autre paire de structures dans le motif, et certains au moins des espaces intermédiaires produisant un couplage entre les structures de la paire correspondante.

9. Filtre spectral selon l'une quelconque des revendications précédentes, adapté pour être utilisé en réflexion, dans lequel les première, deuxième et troisième ondes sont produites par le filtre d'un côté du support (10) par lequel le rayonnement incident arrive sur ledit filtre.

10. Filtre spectral selon l'une quelconque des revendications précédentes, comprenant en outre au moins un résonateur de Fabry-Pérot (RO) qui présente une résonance individuelle supplémentaire, effective pour le rayonnement incident en plus de chaque résonance de couplage, le résonateur de Fabry-Pérot étant conçu pour que la valeur de longueur d'onde de résonance individuelle dudit résonateur soit décalée par rapport à au moins une valeur de longueur d'onde de résonance de couplage du groupe des structures de Fabry-Pérot (1-3), et que ladite valeur de longueur d'onde de résonance de couplage soit à l'intérieur de l'intervalle suivant de résonance individuelle du résonateur de Fabry-Pérot : [λᵣ₀·(1-10/Q₀) ; λᵣ₀·(1+10/Q₀)], où λᵣ₀ et Q₀ sont respectivement les valeurs de longueur d'onde de résonance et de facteur de qualité pour la résonance individuelle du résonateur de Fabry-Pérot, de sorte qu'un profil de réponse spectrale du filtre, en fonction de la longueur d'onde du rayonnement incident, résulte d'une superposition d'au moins la résonance individuelle de chaque résonateur de Fabry-Pérot (R0) avec chaque résonance de couplage de chaque groupe de structures de Fabry-Pérot (1-3), et ait une transition plus raide entre un domaine spectral de coupure et un domaine spectral de fenêtre, par rapport à un filtre de référence qui comporte ledit au moins un résonateur de Fabry-Pérot mais qui est dépourvu des structures de Fabry-Pérot couplées.

11. Filtre spectral selon la revendication 10, dans lequel chaque résonateur de Fabry-Pérot (R0), notamment une épaisseur (h₀) d'un volume interne dudit résonateur, mesurée perpendiculairement à une direction d'onde stationnaire se produisant dans ledit volume interne du résonateur, est conçu pour que la valeur de facteur de qualité de la résonance individuelle dudit résonateur soit inférieure à 30,
et dans lequel le facteur de qualité qui est associé à la longueur d'onde de résonance de couplage située dans l'intervalle [λᵣ₀·(1-10/Q₀) ; λᵣ₀·(1+10/Q₀)] est supérieur à 30.

12. Filtre spectral selon la revendication 10 ou 11, dans lequel le résonateur de Fabry-Pérot (R0) est empilé sur l'une des structures de Fabry-Pérot (1-3) du groupe, selon une direction d'empilement qui est perpendiculaire à la face (S) du support (10).

13. Filtre spectral selon la revendication 12, dans lequel une portion de couche métallique (12₂) est commune au résonateur de Fabry-Pérot (R0) et à la structure de Fabry-Pérot (2) du groupe sur laquelle est empilé ledit résonateur de Fabry-Pérot, ladite portion de couche métallique constituant l'une des portions de surfaces métalliques de ladite structure de Fabry-Pérot.

14. Procédé de filtrage spectral d'un rayonnement électromagnétique, mis en œuvre en utilisant au moins un filtre spectral qui est conforme à l'une quelconque des revendications précédentes, le rayonnement à filtrer ayant des valeurs de longueur d'onde qui sont plus grandes que l'espace intermédiaire (I₁₋₂), mesuré parallèlement à la face (S) du support (10), qui existe entre deux structures de Fabry-Pérot (1, 2) du filtre qui sont couplées l'une avec l'autre,
le procédé étant mis en œuvre pour une application qui est sélectionnée parmi une acquisition d'image monochromatique ou multispectrale, une analyse spectroscopique, et une émission sélective de rayonnement produite par un chauffage du filtre.

## Patentansprüche

1. Spektralfilter, umfassend mindestens eine Gruppe von mehreren Fabry-Perot-Strukturen (1, 2), die gemeinsam von einer Fläche (S) eines Trägers (10) des Filters getragen werden, wobei jede Fabry-Pérot-Struktur zwei reflektierende Oberflächenabschnitte (R1, R2) umfasst, die einander gegenüber, parallel zueinander und innerhalb der Struktur durch ein dielektrisches Medium voneinander getrennt angeordnet sind,
wobei jede der Fabry-Perot-Strukturen (1, 2) der Gruppe so bemessen ist, dass sich eine elektromagnetische Strahlungswellenkomponente zwischen den zwei reflektierenden Oberflächenabschnitten (R1, R2) der Struktur ausbreiten kann, von dem einen zum anderen, und dass sich eine stehende Welle aus mehrfachen Reflexionen der Wellenkomponente ergibt, die abwechselnd auf der Höhe der zwei reflektierenden Oberflächenabschnitte auftreten, sowie eine Einzelresonanz der Fabry-Perot-Struktur entsprechend einer maximalen Amplitude der stehenden Welle innerhalb der Struktur, wenn eine Wellenlänge einer auf das Filter einfallenden elektromagnetischen Strahlung variiert,
wobei mindestens einer der reflektierenden Oberflächenabschnitte (R1, R2) jeder Fabry-Pérot-Struktur (1, 2) der Gruppe von mindestens einem der reflektierenden Oberflächenabschnitte jeder anderen Struktur durch einen Zwischenraum (I₁₋₂) parallel zur Fläche (S) des Trägers (10) getrennt ist,
wobei mindestens ein Parameter, der die Einzelresonanz jeder Fabry-Pérot-Struktur (1, 2) bestimmt, separat von jeder anderen Fabry-Pérot-Struktur, Werte aufweist, die zwischen mindestens zwei der Strukturen derselben Gruppe unterschiedlich sind, so dass die mindestens zwei Strukturen der Gruppe jeweilige Wellenlängenwerte für die Einzelresonanz aufweisen, wirksam für die auf das Filter einfallende elektromagnetische Strahlung, die unterschiedlich sind, und die mindestens zwei Strukturen mit unterschiedlichen Wellenlängenwerten für die Einzelresonanz jeweilige Werte eines Gütefaktors für die Einzelresonanz aufweisen, so dass auf einer Achse der Wellenlänge der einfallenden Strahlung die folgenden Intervalle für Einzelresonanzen: [λᵣᵢ·(1 - 3/Qᵢ) ; λᵣᵢ·(1 + 3/Qᵢ)] paarweise Überlappungen aufweisen, wobei i eine ganze Zahl ist, die jede Fabry-Pérot-Struktur innerhalb der Gruppe identifiziert, und λᵣᵢ und Qᵢ jeweils die Werte von Resonanz-Wellenlänge und Gütefaktor der Einzelresonanz der Fabry-Pérot-Struktur i sind,
und wobei eine Dicke hᵢ des dielektrischen Mediums relativ zu der Fabry-Perot-Struktur i, gemessen senkrecht zu einer Ausbreitungsrichtung der Wellenkomponenten, welche die stehende Welle innerhalb der Fabry-Pérot-Struktur i bilden, größer als oder gleich 0,125·λᵣᵢ /n_{eff_i} ist, wobei n_{eff_i} ein effektiver Brechungsindex für das dielektrische Medium der Fabry-Pérot-Struktur i ist,
und wobei eine Kopplung zwischen zwei der Fabry-Pérot-Strukturen (1, 2) derselben Gruppe, deren Wellenlängenwerte für die Einzelresonanz unterschiedlich sind, durch den zwischen diesen beiden Strukturen bestehenden Zwischenraum (I₁₋₂) erzeugt wird, möglicherweise auch durch ein in dem Zwischenraum vorhandenes Material, wobei ein Trennungsabstand (d₁₋₂) zwischen den beiden so gekoppelten Fabry-Perot-Strukturen, der durch den Zwischenraum bestimmt und parallel zur Fläche (S) des Trägers (10) gemessen wird, kleiner ist als ein Wert der Wellenlänge der Resonanz, die sich auf die Kopplung bezieht, die als Kopplungsresonanz-Wellenlänge bezeichnet wird, die für die auf das Filter einfallende elektromagnetische Strahlung wirksam ist, und die aus einer Interferenz zwischen mindestens drei Wellen resultiert,
unter denen sich befinden:
- eine erste Welle, die von einer Reflexion der auf die Fläche (S) des Trägers (10) einfallenden Strahlung oder von einer Transmission der einfallenden Strahlung durch den Träger herrührt;
- eine zweite Welle, die aus einer ersten (1) der Fabry-Perot-Strukturen der Gruppe heraustritt und die aus einer Überlagerung mehrerer Wellenkomponenten resultiert, von denen mindestens eine der Wellenkomponenten mindestens einen Hin- und Rückweg im Inneren von einer zweiten (2) der Fabry-Pérot-Strukturen der Gruppe durchlaufen hat, die mit der ersten Struktur gekoppelt ist; und
- eine dritte Welle, die aus der zweiten (2) der Fabry-Perot-Strukturen der Gruppe heraustritt, und die sich aus einer anderen Überlagerung mehrerer anderer Wellenkomponenten ergibt, von denen mindestens eine der anderen Wellenkomponenten mindestens einen Hin- und Rückweg innerhalb der ersten (1) der Fabry-Pérot-Strukturen der Gruppe durchlaufen hat,
wobei das Filter **dadurch gekennzeichnet ist, dass** jede Fabry-Pérot-Struktur (1, 2) der Gruppe zwei metallische Oberflächenabschnitte (M1, M2), die parallel zur Fläche (S) des Trägers (10) sind, und ein Innenvolumen (V) umfasst, das zwischen den zwei metallischen Oberflächenabschnitten senkrecht zur Fläche des Trägers begrenzt ist, und parallel zur Fläche des Trägers zwischen gegenüberliegenden Rändern (B1, B2) von mindestens einem der zwei metallischen Oberflächenabschnitte der Struktur begrenzt ist, wobei die zwei gegenüberliegenden Ränder Positionen der reflektierenden Oberflächenabschnitte (R1, R2) der Fabry-Pérot-Struktur bestimmen, so dass sich die Wellenkomponenten, die zur Kopplungsresonanz beitragen, parallel zur Fläche des Trägers innerhalb jeder der gekoppelten Fabry-Strukturen der Gruppe ausbreiten.

2. Spektralfilter nach Anspruch 1, wobei der Parameter, der die Einzelresonanz jeder Fabry-Pérot-Struktur (1, 2) der Gruppe bestimmt, separat von jeder anderen Fabry-Perot-Struktur der Gruppe, und der Werte aufweist, die zwischen zwei der miteinander gekoppelten Strukturen unterschiedlich sind, einer der folgenden Parameter oder eine Kombination aus mehreren davon ist:
- eine Breite (w₁, w₂) des Innenvolumens (V) jeder Struktur (1, 2), gemessen parallel zur Fläche (S) des Trägers (10) zwischen den reflektierenden Oberflächenabschnitten (R1, R2) dieser Struktur,
- ein Brechungsindex des dielektrischen Mediums im Innenvolumen (V) jeder Struktur (1, 2),
- ein Füllungsgrad und/oder eine Zusammensetzung des dielektrischen Mediums im Innenvolumen (V) jeder Struktur (1, 2), und
- ein Absorptionskoeffizient für eine Absorption der elektromagnetischen Strahlung durch jede Struktur (1, 2).

3. Spektralfilter nach Anspruch 1 oder 2, wobei jede Fabry-Pérot-Struktur (1, 2) der Gruppe, insbesondere eine Dicke (h) des Innenvolumens (V) zwischen den beiden metallischen Oberflächenabschnitten (M1, M2) der Struktur, gemessen senkrecht zur Fläche (S) des Trägers (10), so ausgelegt ist, dass der Wert des Gütefaktors der Einzelresonanz der Struktur kleiner als 20 ist,
und wobei die Gruppe von Fabry-Pérot-Strukturen (1, 2), insbesondere der Zwischenraum (I₁₋₂) zwischen zwei der Strukturen dieser Gruppe, die gekoppelt sind, so gestaltet ist, dass ein Wert des Gütefaktors, welcher der Kopplungsresonanz zugeordnet ist, größer als 20 ist, vorzugsweise größer als 70 oder sogar größer als 150.

4. Spektralfilter nach einem der vorangehenden Ansprüche, wobei für jede Fabry-Perot-Struktur (1, 2) der Gruppe das dielektrische Medium in dem Innenvolumen (V) der Struktur aus einem jeweiligen Abschnitt einer Schicht (11) mit parallelen Flächen und gleichmäßiger Dicke aus einem festen dielektrischen Material besteht, wobei die Schicht für alle Strukturen der Gruppe identisch ist.

5. Spektralfilter nach einem der vorhergehenden Ansprüche, wobei ein Muster, das die Fabry-Pérot-Strukturen (1, 2) der Gruppe umfasst, so wie sie durch jeden Zwischenraum (I₁₋₂) zwischen zwei der Strukturen innerhalb der Gruppe getrennt sind, sich mehrfach auf der Fläche (S) des Trägers (10) wiederholt.

6. Spektralfilter nach Anspruch 5, wobei mindestens einer der metallischen Oberflächenabschnitte (M1, M2) jeder der Fabry-Pérot-Strukturen (1, 2) eine Fläche eines jeweiligen metallischen Streifens ist, und wobei das Muster, das die Gruppe von Fabry-Pérot-Strukturen umfasst, mehrfach, vorzugsweise periodisch, gemäß einer Wiederholungsrichtung (D) wiederholt wird, die parallel zur Fläche (S) des Trägers (10) ist, in Form von getrennten und parallelen metallischen Streifen.

7. Spektralfilter nach Anspruch 5, wobei mindestens einer der metallischen Oberflächenabschnitte (M1, M2) jeder Fabry-Perot-Struktur (1, 2) eine quadratische, rechteckige, kreisförmige, elliptische, kreuzförmige oder abgewinkelte Form aufweist, parallel zur Fläche (S) des Trägers (10), und das Muster, das die Fabry-Perot-Strukturen der Gruppe umfasst, mehrere Male entlang von zwei Wiederholungsrichtungen (D₁, D₂) wiederholt wird, die unterschiedlich und parallel zur Fläche des Trägers sind, vorzugsweise periodisch, und wobei die beiden Wiederholungsrichtungen bevorzugt senkrecht zueinander sind.

8. Spektralfilter nach Anspruch 7, wobei das Muster vier Fabry-Perot-Strukturen (1-4) umfasst, die in einer 2 × 2-Matrix entlang der beiden Wiederholungsrichtungen (D₁, D₂) angeordnet sind und so sechs Paare von Fabry-Pérot-Strukturen bilden, wobei jedes Paar einem Zwischenraum (I₁₋₂ , I₂₋₃ , I₃₋₄, I₄₋₁) zwischen den zwei Strukturen des Paars zugeordnet ist, der ein anderer ist als der Zwischenraum jedes anderen Paars von Strukturen in dem Muster, und wobei zumindest einige der Zwischenräume eine Kopplung zwischen den Strukturen des entsprechenden Paars erzeugen.

9. Spektralfilter nach einem der vorhergehenden Ansprüche, angepasst zur Verwendung in Reflexion, wobei die erste, zweite und dritte Welle durch das Filter auf einer Seite des Trägers (10) erzeugt werden, durch welche die einfallende Strahlung auf das Filter trifft.

10. Spektralfilter nach einem der vorhergehenden Ansprüche, ferner umfassend mindestens einen Fabry-Pérot-Resonator (R0), der eine zusätzliche, für die einfallende Strahlung wirksame Einzelresonanz zusätzlich zu jeder Kopplungsresonanz aufweist, wobei der Fabry-Pérot-Resonator so ausgelegt ist, dass der Wellenlängenwert der Einzelresonanz des Resonators in Bezug auf mindestens einen Wellenlängenwert der Kopplungsresonanz der Gruppe von Fabry-Perot-Strukturen (1-3) verschoben ist, und dass der Wellenlängenwert der Kopplungsresonanz innerhalb des folgenden Intervalls gemäß der Einzelresonanz des Fabry-Pérot-Resonators liegt: [λᵣ₀·(1 - 10/Q₀) ; λᵣ₀·(1 + 10/Qo)], wobei λᵣ₀ und Q₀ jeweils die Werte der Resonanzwellenlänge und des Gütefaktors für die Einzelresonanz des Fabry-Pérot-Resonators sind, so dass ein spektrales Antwortprofil des Filters, in Abhängigkeit von der Wellenlänge der einfallenden Strahlung, sich aus einer Überlagerung mindestens der Einzelresonanz jedes Fabry-Perot-Resonators (R0) mit jeder Kopplungsresonanz jeder Gruppe von Fabry-Perot-Strukturen (1-3) ergibt, und einen steileren Übergang zwischen einem Abschneide-Spektralbereich und einem Fenster-Spektralbereich aufweist, verglichen mit einem Referenzfilter, das den mindestens einen Fabry-Pérot-Resonator umfasst, dem jedoch gekoppelte Fabry-Perot-Strukturen fehlen.

11. Spektralfilter nach Anspruch 10, wobei jeder Fabry-Pérot-Resonator (R0), insbesondere eine Dicke (h₀) eines Innenvolumens des Resonators, gemessen senkrecht zu einer Richtung einer in dem Innenvolumen des Resonators auftretenden stehenden Welle, so ausgelegt ist, dass der Wert des Gütefaktors der Einzelresonanz des Resonators kleiner als 30 ist, und wobei der Gütefaktor, welcher der Wellenlänge der Kopplungsresonanz zugeordnet ist, die sich im Intervall
[λᵣ₀·(1 - 10/Q₀) ; λᵣ₀·(1 + 10/Q₀)] befindet, größer ist als 30.

12. Spektralfilter nach Anspruch 10 oder 11, wobei der Fabry-Perot-Resonator (R0) in einer zur Fläche (S) des Trägers (10) senkrechten Stapelrichtung auf eine der Fabry-Perot-Strukturen (1-3) der Gruppe gestapelt ist.

13. Spektralfilter nach Anspruch 12, wobei ein Abschnitt der metallischen Schicht (12₂) gemeinsam zu dem Fabry-Pérot-Resonator (R0) und zu der Fabry-Perot-Struktur (2) der Gruppe gehört, auf welche der Fabry-Pérot-Resonator gestapelt ist, wobei der Abschnitt der metallischen Schicht einen der metallischen Oberflächenabschnitte der Fabry-Pérot-Struktur bildet.

14. Verfahren zur spektralen Filterung einer elektromagnetischen Strahlung, durchgeführt unter Verwendung mindestens eines Spektralfilters nach einem der vorhergehenden Ansprüche, wobei die zu filternde Strahlung Wellenlängen-Werte aufweist, die größer sind als der Zwischenraum (I₁₋₂), gemessen parallel zur Fläche (S) des Trägers (10), der zwischen zwei miteinander gekoppelten Fabry-Pérot-Strukturen (1, 2) des Filters vorliegt, wobei das Verfahren für eine Anwendung durchgeführt wird, die ausgewählt ist aus einer monochromatischen oder multispektralen Bilderfassung, einer spektroskopischen Analyse, und einer selektiven Emission von Strahlung, erzeugt durch ein Erhitzen des Filters.

## Claims

1. A spectral filter comprising at least one group of a plurality of Fabry-Perot structures (1, 2) which are collectively carried by a face (S) of a support (10) of the filter, each Fabry-Perot structure comprising two portions of reflecting surfaces (R1, R2) which are arranged facing one another, parallel to one another, and separated from one another inside the structure by a dielectric medium, each of the Fabry-Perot structures (1, 2) of the group being sized so that a wave component of electromagnetic radiation can propagate between the two portions of reflecting surfaces (R1, R2) of said structure, from one to the other, and so that a stationary wave results from multiple reflections of the wave component which occur in alternation at the two portions of reflecting surfaces, and an individual resonance of said Fabry-Perot structure corresponding to a maximum of amplitude of said stationary wave inside said structure when a wavelength of an electromagnetic radiation incident on the filter varies,
at least one of the portions of reflecting surfaces (R1, R2) of each Fabry-Perot structure (1, 2) of the group being separated from at least one of the portions of reflecting surfaces of each other structure by an intermediate space (I₁₋₂) parallel to the face (S) of the support (10),
wherein at least one parameter which determines the individual resonance of each Fabry-Perot structure (1, 2), separately from each other Fabry-Perot structure, has values which differ between at least two of the structures of the same group, so that said at least two structures of the group have respective values of individual resonance wavelength, effective for the electromagnetic radiation incident on the filter, which are different, and said at least two structures with different values of individual resonance wavelength having respective values of an individual resonance quality factor such that, on a wavelength axis of the incident radiation, the following ranges of individual resonances: [λᵣᵢ·(1-3/Qᵢ); λᵣᵢ·(1+3/Qᵢ)], have pairwise overlaps, where i is an integer that identifies each Fabry-Perot structure within the group, and λᵣᵢ and Qᵢ are respectively the values of the resonance wavelength and of the quality factor of the individual resonance of Fabry-Perot structure i,
and wherein a thickness hᵢ of the dielectric medium, relating to Fabry-Perot structure i and measured perpendicularly to a direction of propagation of the wave components forming the stationary wave inside said Fabry-Perot structure i, is greater than or equal to 0.125·λᵣᵢ/n_{eff_i}, n_{eff_i} being an effective refractive index for the dielectric medium of Fabry-Perot structure i,
and wherein a coupling between two of the Fabry-Perot structures (1, 2) of the same group, whose individual resonance wavelength values are different, is produced by the intermediate space (I₁₋₂) existing between said two structures, possibly also by a material present in said intermediate space, a separation distance (d₁₋₂) between the two Fabry-Perot structures thus coupled, determined by said intermediate space and measured parallel to the face (S) of the support (10), being less than a resonance wavelength value relating to the coupling, called coupling resonance wavelength, which is effective for the electromagnetic radiation incident on the filter, and which results from an interference between at least three waves which include:
- a first wave which originates from a reflection of the incident radiation on the face (S) of the support (10), or from a transmission of the incident radiation through the support;
- a second wave which comes out from a first (1) of the Fabry-Perot structures of the group, and which results from a superposition of several wave components among which at least one of said wave components has completed at least one round trip inside a second (2) of the Fabry-Perot structures of said group, coupled with said first structure; and
- a third wave which comes out from said second (2) of the structures of Fabry-Perot of the group, and which results from another superposition of several other wave components among which at least one of said other wave components has completed at least one round trip inside said first (1) of the Fabry-Perot structures of said group,
the filter being **characterized in that** each Fabry-Perot structure (1, 2) of the group comprises two portions of metal surfaces (M1, M2) which are parallel to the face (S) of the support (10), and an internal volume (V) which is limited between said two portions of metal surfaces perpendicularly to the face of the support, and limited parallel to the face of the support between opposite edges (B1, B2) of at least one of said two portions of metal surfaces of the structure, said two opposite edges determining positions of the portions of reflecting surfaces (R1, R2) of the Fabry-Perot structure, so that the wave components which contribute to the coupling resonance propagate parallel to the face of the support inside each of the coupled Fabry-Perot structures of the group.

2. The spectral filter of claim 1, wherein the parameter which determines the individual resonance of each Fabry-Perot structure (1, 2) of the group, separately from each other Fabry-Perot structure of said group, and which has values which differ between two structures which are coupled with each other, is one of the following parameters or a combination thereof:
- a width (w₁, w₂) of the internal volume (V) of each structure (1, 2), measured parallel to the face (S) of the support (10) between the portions of reflecting surfaces (R1, R2) of said structure,
- a refractive index of the dielectric medium in the internal volume (V) of each structure (1, 2),
- a fill ratio and/or a composition of the dielectric medium in the internal volume (V) of each structure (1, 2), and
- a coefficient of electromagnetic radiation absorption by each structure (1, 2).

3. The spectral filter of claim 1 or 2, wherein each Fabry-Perot structure (1, 2) of the group, in particular a thickness (h) of the internal volume (V) between the two portions of metal surfaces (M1, M2) of said structure, measured perpendicularly to the face (S) of the support (10), is designed so that the value of the individual resonance quality factor of said structure is less than 20,
and wherein the group of Fabry-Perot structures (1, 2), in particular the intermediate space (I₁₋₂) between two of the structures of said group which are coupled, is designed so that a quality factor associated with the coupling resonance is greater than 20, preferably greater than 70, even greater than 150.

4. The spectral filter of any one of the preceding claims, wherein, for each Fabry-Perot structure (1, 2) of the group, the dielectric medium in the internal volume (V) of said structure consists of a respective portion of a layer (11) having parallel faces and uniform thickness, of a solid dielectric material, said layer being identical for all structures of the group.

5. The spectral filter of any one of the preceding claims, wherein a pattern which comprises the Fabry-Perot structures (1, 2) of the group, as separated by each intermediate space (I₁₋₂) between two of said structures within the group, is repeated multiple times on the face (S) of the support (10).

6. The spectral filter of claim 5, wherein at least one of the portions of metal surfaces (M1, M2) of each of the Fabry-Perot structures (1, 2) is one face of a respective metal strip, and wherein the pattern which comprises the group of Fabry-Perot structures is repeated multiple times, preferably periodically, in a repeat direction (D) which is parallel to the face (S) of the support (10), in the form of separate and parallel metal strips.

7. The spectral filter of claim 5, wherein at least one of the portions of metal surfaces (M1, M2) of each Fabry-Perot structure (1, 2) has a square, rectangular, circular, elliptical, cross, or L shape, parallel to the face (S) of the support (10), and the pattern comprising the Fabry-Perot structures of the group is repeated multiple times in two repeat directions (D₁, D₂) which are distinct and parallel to the face of the support, preferably periodically, and preferably the two repeat directions are perpendicular to each other.

8. The spectral filter of claim 7, wherein the pattern comprises four Fabry-Perot structures (1-4) which are arranged in a 2 × 2 matrix along the two repeat directions (D₁, D₂), thus forming six pairs of Fabry-Perot structures, each pair being associated with an intermediate space (I₁₋₂, I₂₋₃, I₃₋₄, I₄₋₁) between the two structures of said pair other than the intermediate space of every other pair of structures in the pattern, and at least some of the intermediate spaces producing a coupling between the structures of the corresponding pair.

9. The spectral filter of any one of the preceding claims, adapted for use in reflection, wherein the first, second, and third waves are produced by the filter on one side of the support (10) where the incident radiation reaches said filter.

10. The spectral filter of any one of the preceding claims, further comprising at least one Fabry-Perot resonator (R0) which has an additional individual resonance, effective for the incident radiation, in addition to each coupling resonance, the Fabry-Perot resonator being designed so that the individual resonance wavelength value of said resonator is shifted relative to at least one coupling resonance wavelength value of the group of Fabry-Perot structures (1-3), and so that said coupling resonance wavelength value is within the following range for the individual resonance of the Fabry-Perot resonator:
[λᵣ₀·(1-10/Q₀); λᵣ₀·(1+10/Q₀)], where λᵣ₀ and Q₀ are respectively the values of the resonance wavelength and of the quality factor for the individual resonance of the Fabry-Perot resonator, so that a spectral response profile of the filter, as a function of the wavelength of the incident radiation, results from a superposition of at least the individual resonance of each Fabry-Perot resonator (R0) with each coupling resonance of each group of Fabry-Perot structures (1-3), and has a steeper transition between a cutoff spectral domain and a window spectral domain, compared to a reference filter which includes said at least one Fabry-Perot resonator but which is devoid of the coupled Fabry-Perot structures.

11. The spectral filter of claim 10, wherein each Fabry-Perot resonator (R0), in particular a thickness (h₀) of an internal volume of said resonator, measured perpendicularly to a direction of a stationary wave occurring in said internal volume of the resonator, is designed so that the value of the quality factor of the individual resonance of said resonator is less than 30,
and wherein the quality factor associated with the coupling resonance wavelength located within the range [λᵣ₀·(1-10/Q₀) ; λᵣ₀·(1+10/Q₀)] is greater than 30.

12. The spectral filter of claim 10 or 11, wherein the Fabry-Perot resonator (R0) is stacked on one of the Fabry-Perot structures (1-3) of the group, in a stacking direction which is perpendicular to the face (S) of the support (10).

13. The spectral filter of claim 12, wherein a portion of metal layer (12₂) is common to the Fabry-Perot resonator (R0) and to the Fabry-Perot structure (2) of the group on which said Fabry-Perot resonator is stacked, said portion of metal layer constituting one of the portions of metal surfaces of said Fabry-Perot structure.

14. A method for the spectral filtering of an electromagnetic radiation, implemented using at least one spectral filter according to any one of the preceding claims, the radiation to be filtered having wavelength values which are larger than the intermediate space (I₁₋₂), measured parallel to the face (S) of the support (10), which exists between two Fabry-Perot structures (1, 2) of the filter which are coupled with each other,
the method being implemented for an application selected from monochromatic or multispectral image capture, spectroscopic analysis, and selective emission of radiation produced by heating of the filter.
